Europäisches Patentamt

European Patent Office

Office européen des brevets

(19)

(11) Publication number: **0 273 124 B1**

(12) **EUROPEAN PATENT SPECIFICATION**

(45) Date of publication of patent specification: **21.08.91**  (51) Int. Cl.⁵: **G08B 13/22**

(21) Application number: **87115306.0**

(22) Date of filing: **20.10.87**

(54) Antitheft system.

(30) Priority: **03.12.86 IT 8366786**

(43) Date of publication of application:
**06.07.88 Bulletin 88/27**

(45) Publication of the grant of the patent:
**21.08.91 Bulletin 91/34**

(84) Designated Contracting States:
**AT BE CH DE ES FR GB GR IT LI LU NL SE**

(56) References cited:
**GB-A- 2 051 442**
**GB-A- 2 079 837**
**US-A- 4 143 368**

(73) Proprietor: **DELTA ELETTRONICA s.p.a.**
**Via Astico 41**
**I-21100 Varese (VA)(IT)**

(72) Inventor: **Memmola, Serafino**
**Via Cimabue, 62**
**I-21100 Varese (VA)(IT)**

(74) Representative: **Ferraiolo, Ruggero et al**
**Via Napo Torriani, 10**
**I-20124 Milano(IT)**

EP 0 273 124 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

The present invention relates to an antitheft system and particularly to an antitheft system for motor-vehicles.

Various types of antitheft systems for motor-vehicles exist till now, and among them the more complex are the remote controlled systems with portable remote control and the functions of the system are to cause an alarm, generally acoustical alarm and warning light, when theft attempts are made, by removal of the motor-vehicle, or by lifting it or forcing the accesses open, and moreover any time the vehicle is sabotaged and i. e. the electric input from the vehicle battery is cut out, main input of the antitheft system even when independent batteries are provided for operation of the alarm means.

Aim of the device according to the present invention is to carry out a new system which, in addition to the functions achieved up to now, also fulfils other new functions, so as to increase the protection of the motor-vehicle as well as of its driver.

A system for remotely activating an alarm is also described in US-A-4143 368.

For shortness, in the text and in the claims, instead of the complete description of the system, of the circuits, of the modules and of the main components of the antitheft system, only the initials used in the first occurrence shall be used.

The antitheft system ATS (AntiTheft System) for motor vehicles according to the present invention is composed of a portable remote control, comprising an encoding module with a control key, a radio wave, infrared or other type transmitting module and a power source, and of a device installed on the motor-vehicle comprising a receiving module of the same type as the transmitting one, a decoding module, an ATSO (AntiTheft System Operation) module for operation of the antitheft system, an alarm input module from the detectors, which detectors consist, for example, of contact sensors, ultrasound modules, anti-lifting devices and detectors of any other type, suited to arm the system when the remote control key is actuated, if the system is disarmed and the supplying of the electric circuits EOCI (Engine Operation Circuit) essential for operation of the engine is disconnected, to disarm the system when the remote control key is actuated, if the system is armed and to actuate the alarm in case of sabotaging of the system itself, the module ATSO for operation of the antitheft system and the alarm input module from the detectors including electronic circuits composed of such components, discrete and not, so connected as to be suited to accomplish also an antirobbing alarm function when the remote control key is actuated while the ATS is disarmed and the EOCI circuits are connected and simultaneously the driver's door is open, that is in the case which occurs when a robber compels the driver out from the motor-vehicle with the engine running or anyhow with the key of the main dashboard of the motor-vehicle inserted and i. e. with the EOCI circuits on, and with the door open and the driver actuates the remote control key, normally the reserve one which he keeps in the pocket, while he gets out from the vehicle or immediately after, providing the door is still open, the said function of antirobbing alarm consisting of an acoustical and/or other type of alarm, and of disconnection of the EOCI input, that is the locking of the engine itself.

In a preferred solution the ATSO module includes such electric and electronic circuits and i. e. including components, discrete and not, such and so connected that the antirobbing alarm occurs with a predetermined delay from actuation of the remote control by the driver so that the robber goes away with the vehicle from the driver before the said alarm occurs, sufficiently to prevent the robber from reacting against the driver.

In an improvement of the previous solution the ATSO module includes such memory circuits as to allow the antirobbing alarm control to be given even within a predetermined time after the door of the driver is closed.

In a preferred solution the ATSO module comprises a microprocessor MP (MicroProcessor) and at least following electronic circuits:

- a circuit SACI (SAbotage CIrcuit) for sabotage warning,
- a circuit RECI (REset CIrcuit) of MP,
- a circuit PDCI (Pilot Door CIrcuit) for unlocking of MP when the EOCI are connected but the driver's door is open,
- a circuit DSCI (Detectors Supplying CIrcuit) for arming and disarming of ATS, and that is for supplying of the alarm detectors,
- a circuit ARCI (AntiRobbery CIrcuit) for signaling to MP that the antirobbing conditions occur, that is EOCI connected and driver's door open,
- a circuit LCCI (Locking Checking CIrcuit) to check the condition of locking or unlocking of the device DLDE (Door Locking DEvice) for locking the door locks,
- a circuit ADCI (Acoustic Devices CIrcuit) for actuation of the acoustical and/or of other type alarm warning devices,
- a circuit DLCI (Door Locking CIrcuit) for locking the DLDE and viz. the door locks,
- a circuit DUCI (Door Unlocking CIrcuit) for unlocking the DLDE and viz. the door locks,
- a circuit ALCI (Alarm Lights CIrcuit) actuating the alarm warning lights,

and the said circuits consist of components, discrete and not, such and so connected one to the other, to the microprocessor, to the circuit SUCI (SUpplying CIrcuit) supplying the modules of the ATS installed on the motor-vehicle and to the other elements of the motor-vehicle connected to the ATS in such a way, and the MP is provided with ROM masked upon manufacture with such a program that the ATS is suited to effect the following operations:

- the MP as soon as connected to the supply after having been installed on the motor-vehicle actuates the clock oscillating system,
- the reset pin is brought up and hence the MP is unlocked,
- the MP checks through the circuit SACI if a sabotage is occurring,
- if not, the MP goes to check the state of the pin of control input from the decoding module as a consequence of a control given by the remote control,
- as soon as a control impulse arrives for actuation of the remote control the MP performs the following operations:
- checks through the DSCI if the ATS is armed or not,
= = if the ATS is not armed the input control to the MP coming form the remote control is intended as a control for arming of the ATS, after the MP has checked that the driver's door is not open and the EOCI are not connected and therefore the MP:
  - arms the ATS for supplying through the circuits DSCI the alarm detectors,
  - actuates through ALCI the special indicating lights, usually the direction indicators, for signaling to the driver that the ATS has been armed,
  - checks through LCCI if the DLDE is in position of unlocking of the door locks,
  - if so, actuates through the DLCI the DLDE to lock the locks,
  - checks after some seconds through LCCI if the locks have been locked,
  - if not, actuates one of the alarm detectors so that it sends a signal informing the driver that the locks of the doors have not been locked,
  - if upon the first check of the DLDE it is found to be already in locked position the last three operations are not carried out;
= = if the ATS is already armed the input control coming from the remote control is intended as a control for disarming of the ATS and hence the MP:
  - disarms the ATS through the DSCI by cutting off the supply to the alarm detectors,

- actuates, through the circuit ALCI, the arranged indicators, usually the direction warning lights, to inform the driver that the ATS has been disarmed,
- checks the state of the DLDE through LCCI,
- if it finds it in locked position actuates through DUCI the unlocking of the DLDE,
- if it finds the DLDE already in position of unlocking does not perform the previous operations;
= = = after arming of the ATS upon receiving by the module for alarm input from the detectors of an alarm signal, the MP:
  - provides, through ADCI, to actuate the acoustical or other type of alarm warning devices according to the alarm cycles contemplated by the MP program,
  - provides, through ELCI (Engine Locking CIrcuit), to disconnect EOCI circuits and hence to lock the engine,
  - actuates, through ALCI, the alarm warning lights;
= = = if the ATS is not armed, but the circuits EOCI are connected and the door on the driver's side is open, a control incoming to MP following to the actuation of the remote control key is intended by the MP as an antirobbing alarm control and therefore the MP:
  - immediately arms through DSCI the ATS,
  - and only after the predetermined delay actuates through the ADCI the alarm detectors, acoustical and of other type, and through the ELCI the EOCI are disconnected and then the engine locked,
  - and causes the antirobbing alarm cycle to stop only by means of opening and subsequently closing the supply of the circuit SUCI and not by a control issued from the remote control.

In an improvement of the previous solution the module ATSO comprises such circuits and the MP is so programmed that the sabotage alarm of the ATS is caused not by the disconnection of the supply of the ATS but by the reconnection of the supply after it has been disconnected, and said alarm can only stop after reopening and closing of the ATS supply switch.

In another preferred solution the module ATSO comprises such electronic circuits and the MP is so programmed that it can pre-establish upon its installation the duration of time of the single operation cycles of the alarm warning devices and if said operation during said cycles must be continuous or intermittent.

In an improvement of the previous solutions the module for alarm input from the detectors comprises such electronic circuits and the MP is so programmed that the said module can select the alarm signals coming from distinct sets of detectors and send to the module ATSO distinct signals and this is suited to cause different alarms according to the set of detectors issuing the alarm signal.

In a further preferred solution the ATS comprises among the alarm detectors an ultrasound module and the latter is provided with one or more LED, so connected to the US module itself, to the input module and to the MP of the module ATSO and the MP is so programmed that one of the LED informs, by its lighting, that the ATS has been armed, that the same or another one informs by its going on or going out that an alarm is running caused by an alarm signal from the module US and that subsequently to each alarm one LED informs by intermittent lighting that an alarm has occurred and, based upon the intermittence, which set of detectors has given the alarm signal and in case such signal is made by the same LED which lightens to inform that the ATS is armed, the intermittent signal is sent only after disarming of the ATS and until the key is inserted into the main dashboard i. e. the circuits EOCI are connected.

In an improvement of the previous solution the ultrasound module is mounted in a housing which is installed in the upper part of the windshield inside the motor vehicle and in the same housing is also mounted the receiving module of the ATS so as to improve to the utmost the reception of the signals sent by the remote control and to allow therefore the latter to be provided with a lower power source.

In an improvement of the previous solution the said LED are connected to such circuits and so that one of the LED can signal that an alarm is running which has been detected by the ultrasound module even during the time the ATS is cut out after its arming, this allowing therefore to effect operation tests in said interval of the module US without causing the alarm devices to become operating through ADCI and ALCI.

In an improvement of the previous solutions the alarm input module and the ultrasound module comprise electronic circuits suited, when the ATS is armed, to send alarm signals to the module ATSO when the module US is sabotaged and i. e. its supply is cut off or short-circuited, when the driver's door is opened and when the emitting and/or receiving surface of the ultrasounds of said module is blinded.

In a further solution the module ATSO comprises such electronic circuits that they can eventually be so prepared upon installation of the module and the MP so programmed that the module ATSO itself does not carry out the antirobbing program.

In another solution the remote control comprises also a second control key of the encoding module and the said module is suited, if the second key is actuated, to send a message partially different from the one sent with the actuation of the first key, and the decoding module is suited to distinguish the two messages and hence to send to the module ATSO impulses to control different circuits or different pins of the MP, and the module ATSO includes such electronic circuits and the program of the MP is such that following to controls given with the said second key the module ATSO determines a panic alarm and i. e. an alarm having a pre-established duration independently from the arming or disarming of the ATS.

In order to explain better the system according to the present industrial invention an embodiment shall be described, as an example only, with reference to the enclosed drawings, wherein:
-   figures 1 and 5 are electronic block diagrams;

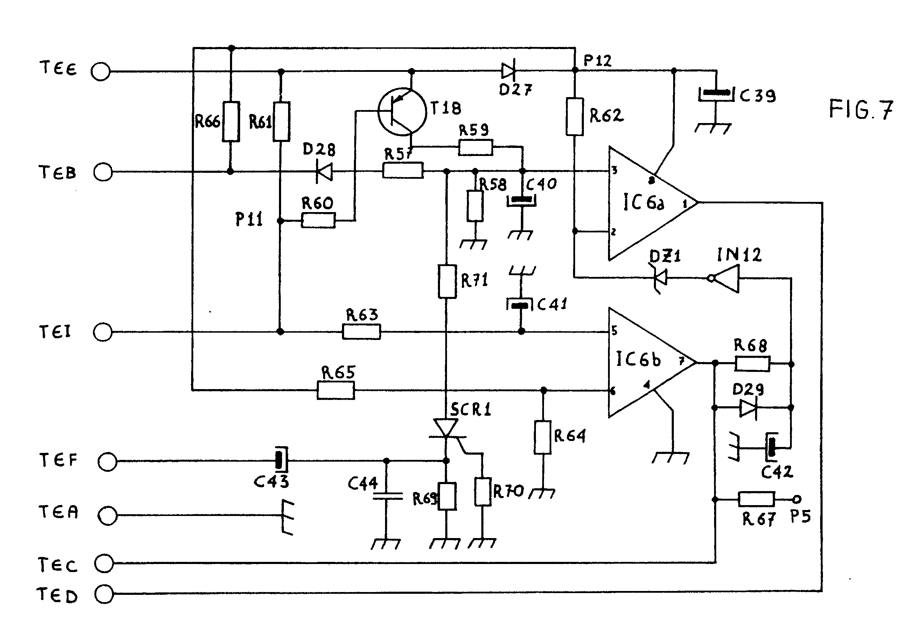

-   figures 2, 3, 6, 7 and 8 are electronic diagrams;
-   figure 4 is a simplified electronic diagram.

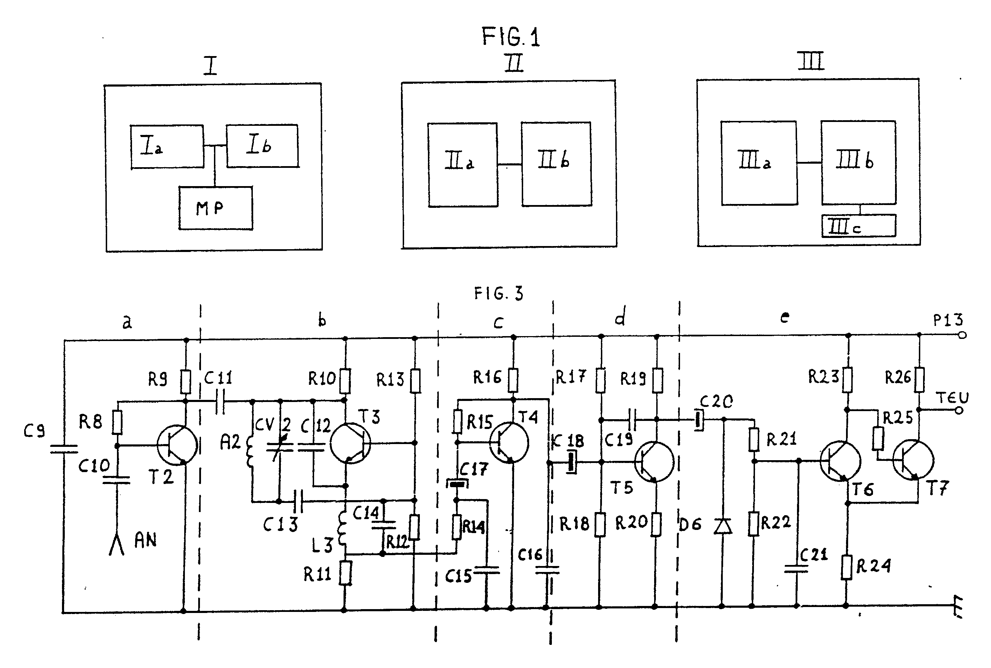

The antitheft system for motor-vehicles ATS (fig. 1) comprises a portable remote control I and a receiving section II and an operation section III installed on the motor-vehicle.
The remote control I comprises an encoding module Ia, a radiotransmission module Ib, a micropile MB and an acoustical controller BP. The receiving section II comprises a radioreceiving module IIa and a decoding module IIb, while the operation section III comprises an operation module of the antitheft system ATSO IIIa, a warning input module IIIb and an ultrasound module US IIIc.

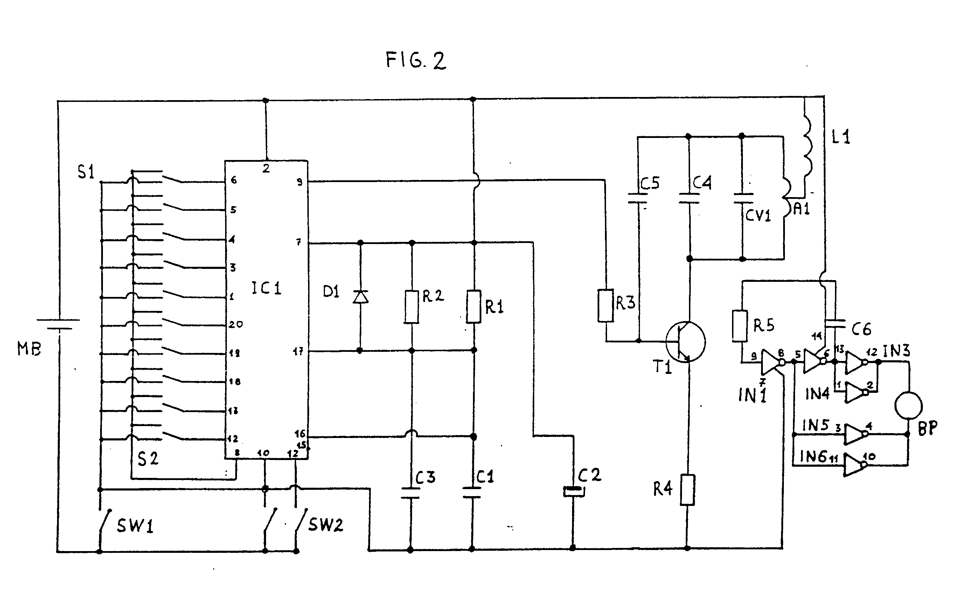

Encoding module Ia (fig. 2).

The encoding module Ia of the remote control comprises the integrated circuit IC1, composed of a COP 411 (Controlled Oriented Processor) Single Chip Microcontroller of the National Semiconductor with 20 pins controlled by the switches SW1 and SW2 respectively actuated by the keys TA1 and TA2.
IC1 is supplied by the pin 2 with the positive at + 3 V by the micropile MB while the pin 10 is grounded only with closing of one of the two switches SW1 or SW2. The pins 6, 5, 4, 3, 1, 20, 19, 18, 13, 12 are the encoding pins and can have three positions and i. e. they can remain open, or connected to the conductor S1 which is grounded by the said switches SW1, SW2, or connected to the conductor S2 connected to the pin 8, which is brought high by IC1 when it starts operating with the closure of one of the two switches SW1, SW2. The said encoding pins are so prepared before installation of the remote control as to constitute a personalized encoding for that specific remote control. The pin 16 is connected through the resistor R1, 47 ko, to the positive and through the capacitor C1, 100 pF, to ground, said components complete the oscillatory (clock) system of IC1. The pin 7 is also directly connected to the positive and through the electrolytic capacitor C2, 0,1 miF, to ground.

Owing to keyboard requirements we shall use in the example the letters "mi" to indicate "micro" and the letter "o" to indicate "omega". The reset pin 17 is connected to the positive through the parallel of the resistor R1, 47 ko, and the diode D1 (1N4148) and to ground through the capacitor C3, 100 kpF.

The ground to the whole section I arrives only when one of the two control keys TA1 or TA2 are actuated and therefore closed the switches SW1, SW2 and this in order to economize the micropile MB. The pin 11 is connectable to ground only with the closure of SW2. From pin 9 departs the output signal from IC1.

Operation of the encoding module Ia.

When the key TA1 is depressed and hence SW1 is closed, the ground is brought to the whole section of the remote control and as concerns IC1 the pin 10 is grounded, it follows that the pins 8 and 17 go low, therefore the capacitor C3 begins to charge, and when C3 is charged the pin 17 becomes high and therefore IC1 unlocks and is ready to start the operations for which it has been programmed; a cyclical reading of the encoding pins begins then for formation of the encoded message 1, composed of 10 bits, the encoding of which corresponds to the connections of the aforesaid pins, preceded by some initial pattern bits and followed by some closing bits, it follows then the emission of the said encloded message from pin 9. If the actuation control of IC1 is given through the key TA2, SW2 closes and therefore the ground is brought to the whole section as well as with the closure of SW1 and i. e. with the control of TA1, but in this case also the pin 11 is grounded, IC1 carries out then the same operations caused by the closure of SW1 with the difference that the encoded message 2, in addition to the same ten bits determined by the encoding has the initial pattern bits different from those of the message 1 determined by the closure of SW1.

Radiotransmission module Ib (fig. 2).

The radiotransmission module Ib comprises the transistor amplifier T1 (BTH 24), the base of which is connected through the resistor R3, 390 ko, to the pin 9 of output of the message from IC1, and the emitter of which is connected to ground through R4, 1 ko, while the collector is connected to the parallel of the capacitor C4, 2,2 pF, of the variable capacitor CV1, 1,4 to 4 pF, and of the coil A1, which is composed of a winding ⌀ 1 mm and 10 mm inside diameter, and which acts as oscillating circuit with CV1 as well as antenna, and is connected to the positive through the inductance L1, 82, miH, in addition the collector of T1 is connected through the aforesaid parallel and the capacitor C 5, 3,3 pF, to its base.

The remote control comprises furthermore the micropile MB of Toshiba, composed of a 3 V lithium element, and the acoustical alarm warning device BP, which emits an acoustical signal all over the time during which one of the two keys is depressed; it includes the integrated circuit IC2, which is an inverter Schmitt trigger, composed of a MM 74C14N HEX Inverting Schmitt Trigger of the National Semiconductor, whose six units are connected as shown in the figure, the resistor R5, 470 ko and the capacitor C6, 330 pF and the acoustical warning device BP composed of piezoelectric disk PB (Murata 7NB/15/9DM/5) ⌀ 15 mm.

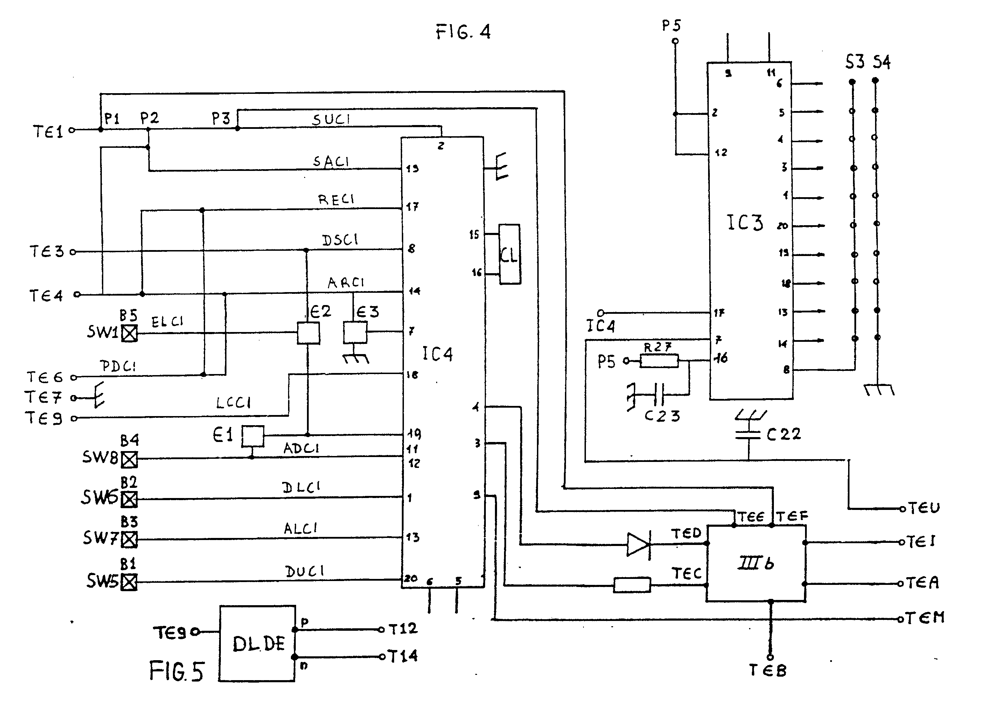

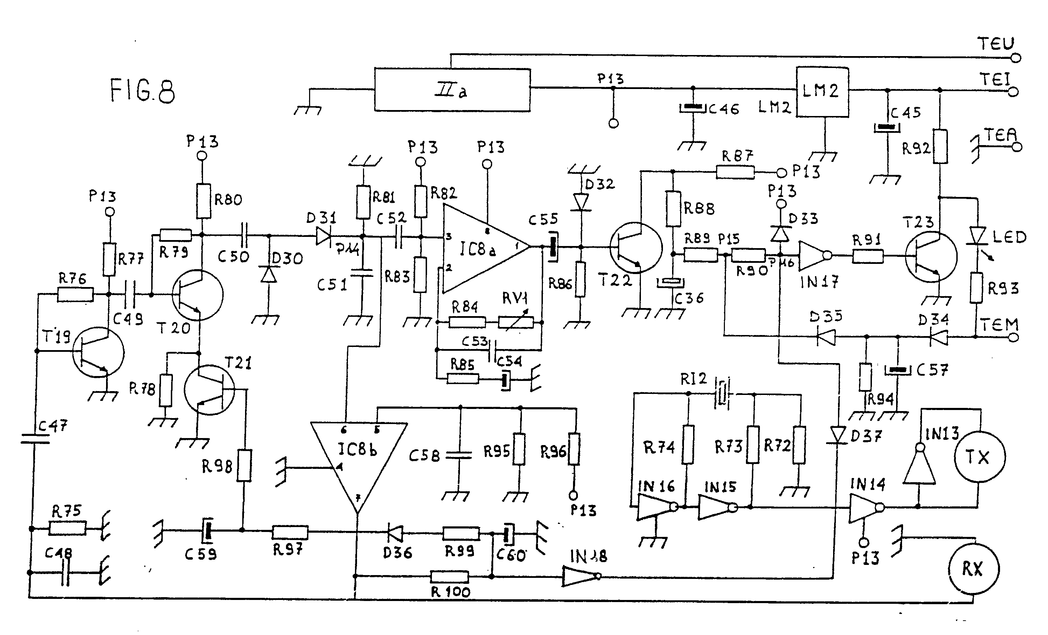

Supplying circuits of the sections II and III installed on the motor-vehicle (figg. 5, 6, 8).

The supply of the decoding module II, of the operation module of the antitheft system ATSO IIIa and of the warning input module IIIb is provided by the circuit SUCI which departs from the terminal TE1 connected to the positive pole + 12 Vcc of the vehicle battery, the said circuit comprises the diode D2 (1N4004), the switch SW3 controlled by the key K1 for supplying of the ATS, the inductance L2, 10 miH, the resistor R6, 100o, the capacitors C7, 220 kpF and C8, 100 kpF, connected to ground, by the voltage regulator LM1, composed of a stabilizer LM2931 of the National Semiconductor. The key K1, which controls SW3, controls simultaneously but inversely the emergency switch SW4 and i. e. when it closes SW3 it opens SW4 and viceversa.

The circuit SUCI has the following branches:
- from the point P1 upstream of SW3 and of D2 come at + 12 V the supplying line of the direction indicators and that of warning input module,
- from the point P2 downstream of D2 and upstream of SW3 comes the supplying of the circuit RECI of reset, and the said point P3 is connected in addition through the diodes (1N4004) D3, D4, D5 to the supplying line at + 12 V which departs from the terminals TE4 and TE5, and which is provided with the voltage limiter GM1 (GE-MOV of the General Electric) connected to ground. The terminal TE4 is connected upstream with the vehicle battery through the switch (which is not indicated in the figure) of the main dashboard, controlled with the engine ignition key K2, and downstream through SW4 and SW9 to the terminal TE5, from which the electric circuits EOCI depart, which are essential for operation of the engine (not indicated in the figure). Of the said switches, SW4 is normally open, as after installation of the ATS the removal of the key K1 causes closure of SW3 and therefore connection of the supply of the ATS as well as opening of SW4, while SW9 is normally closed and can be opened only by the circuit ELCI.

- from the point P3 downstream of L2 come still at +12 V the supplying line of the coils B1, B2, B3, B4 of the module ATSO, the supplying line of the input module IIIb through the terminal TEE, and the supplying line of the module US through R7, 4,7 Ko and the terminal TEM,
- from the point P4 comes a connection to ground through the capacitor CB,
- from the point P5 comes all the lines at + 5 V supplying the decoding modules 11b, the operation ATSO IIIa and the input module IIIb.

Supplying of the radioreception module IIa is achieved through the input module IIIb, together with the supplying of the module US, as the radioreceiver, in order to improve to the utmost the reception, is installed in the case of the example in the same housing as the module US, which is itself located inside the windshield of the motor-vehicle on the rearview mirror.

Radioreception module IIa (fig. 3).

The radioreceiver IIa of the section II is composed of an amplifier AF (high frequency) "a", a superreactive receiver "b", two stages "c" and "d" for amplification to BF (low frequency) and an impulse former "e".

The amplifier AF "a" is composed of the transistor T2 (BFR91) with the resistors R8, 47ko and R9, 560o, the capacitors C9, 1kpF and C10, 6,8pF and the antenna AN; the superreactive receiver "b" comprises the capacitors C11, 0,68 pF, C120, 3,3pF, C13, 33pF and C14, 270pF, the variable capacitor CV2, from 2,5 to 6pF, the coil A2 with 2,5 copper windings Ø1mm and inside diameter of 4,6mm and 1mm distance between the windings, the inductance L3, 10 miH, the resistors R10, 10ko, R11, 10ko, R12 and R13, 82ko, the transistor T3 (BFR91); the first stage "c" of the low frequency amplifier comprises the transistor T4 (BC239C) with the resistors R14, 47ko, R15, 4,7Mo and R16, 10ko, the capacitors C15 and C16, both having 1kpF, and the electrolytic capacitor C17, 2,2miF, while the second stage "d" of said amplifier comprises the transistor T5 (BC239C) with the resistors R17, 560ko, R18, 82ko, R19, 8,2ko and R20, 100o and the electrolytic capacitor C18, 2,2 miF and the capacitor C19, 330 pF; the impulse former "e" is composed of the electrolytic capacitor C20, 2,2 miF, the diode D6 (AA117), the Schmitt trigger comprising the resistors R21 and R22, 82 ko, the transistors T6 and T7 (both BC182B), the resistors R23, 33ko, R24, 220o, R25 and R26, 10ko and the capacitor C21, 1kpF.

The output terminal TEU of the receiver i. e. the collector of T7 is connected to the pin 7 of the integrated circuit IC3 of the decoding module IIb.

Decoding module IIb (fig. 4).

The said module comprises the integrated circuit IC3 composed of the COP 313L (Control Oriented Processor) of the National Semiconductor with 20 pins, of which the pins 2 and 12 are connected to the point P5, + 5 V, of the supplying circuit, the pin 10 is connected to ground, the pin 16 of the oscillating system (clock) is connected to the +5V through the resistor R27, 47 ko, and to ground with the capacitor C22, 100 pF, the reset pin 17 is connected to the reset pin 17 of IC4 of the module IIIa.

The input pin 7 of IC3 is connected to the output TEU of the radio-receiver IIa and is provided with the filter C23, 3,3 kpF, the decoding pins 6, 5, 4, 3, 1, 20, 19, 18, 13, 14 can be prepared before installation similarly to the encoding pins of IC1, in order to be connected with the conductor S4 to ground, or with the conductor S3 connected to the pin 8 and which state depends therefore from the state of said pin 8, or they can remain open.

The pins 9 and 11 are the output pins which transmit a positive impulse of 1,5 sec duration to the module ATSO IIIa of the section III when IC3 receives to the pin 7 a message with one of the two pre-established codes, in case of the message 1 the impulse outputs from pin 9, in case of the message 2 from pin 11.

Operation module ATSO IIIa (fig. 4, 5, 6)

The said module IIIa comprises the integrated circuit IC4, composed, it too, of a COP 313L of the National Semiconductor and of a range of circuits which connect the single pins of IC4 with the terminals of the module.

The pin 2 is connected with the feeding at +5m C from P5, and to ground through the capacitor C24, 100 kpF protecting IC4 and the electrolytic capacitor C25, 680 mi F and 10 V filter of the supplying of all modules of the sections II and III.

To the pins 15 and 16 are connected the resistors R28, 1Mo and R29, 4,7 ko and the ceramic resonator R11, 455 kHz (U 455 of the Japanese Murata), which complete the oscillating circuit (clock) of IC4. The pin 4 is connected to the output terminal TED of the input module for the transmission from the latter to IC4 of the continuous alarm signals, while the pin 3 is connected to the TEC of the said module for the reception of the three cycle alarm signals, and i.e. of signals which can determine the normal alarm cycle only three times during connection of the ATS, as the eventual fourth signal and the successive ones do nomore let the alarm cycle start. From pin 9 departs the circuit LECI (LEd CIrcuit) for intermittent switching on through the terminal TEM of the LED comprised in the module US, said circuit includes the resistor R30, 15 ko, the diode D7 (1N4148) connected to the point P6 of the circuit ARCI connected to the pin 14, the transistor T8 (BC182B), the emitter of which is connected to ground through D8 (1N4004) while the collector is connected to the said terminal TEM, which through the diode D9 (1N4004) and the capacitor to ground C26, 100 kpF is connected in addition to the circuit DSCI which also supplies the sensors through TE8.

The pins 6 and 5 are respectively connected to the pins 9 and 11 of IC3 and through these the impulses corresponding to the controls respectively of the key TA1 and TA2 of the remote control I arrive to IC4.

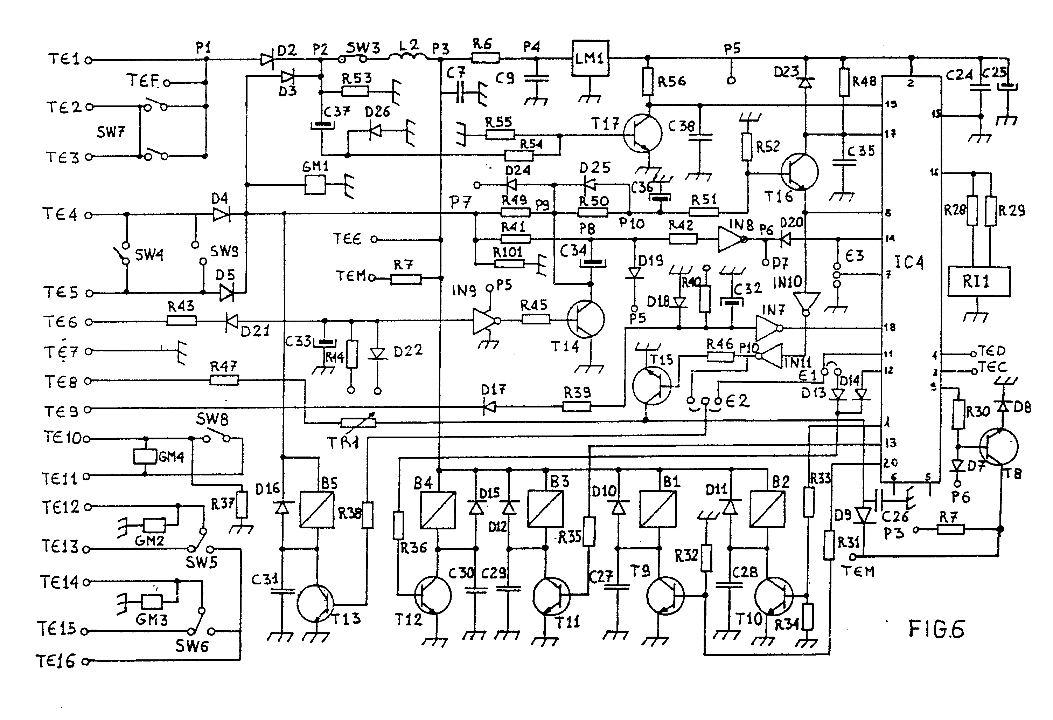

From pin 20 departs the circuit DUCI controlling the opening of the device for locking and unlocking the doors DLDE, said circuit comprises beginning from pin 20 the resistors R31, 33 ko and R32, 100 ko, the transistor T9 (BCX38), the emitter of which is to ground, while the collector is connected to one end of the coil B1, which, protected by C27, 100 kpF and by the diode D10 (1N4004), controls, when excited, the switch SW 5 and moves it from the rest position indicated in the diagram of fig. 6 to the other position so that DLDE is supplied at the connecting terminal p with the positive at + 12V through the terminals TE12 and TE16, the latter being permanently connected to the prositive of the vehicle battery, and at the connecting terminal n with the ground through TE 14 and TE 15, SW 6 being in the rest position indicated in the figure 6 and the terminal TE 13 and TE 15 being permanently connected to ground. The terminals TE 12 and TE 14 are connected to ground respectively with the voltage limiters GM2 and GM3, which are varistors GE-MOV of the General Electric.

From pin 1 departs the circuit DLCI controlling the lock of the DLDE which comprises, beginning from pin 1, the resistors R33, 33 ko and R34, 100 ko, the transistor T10 (BCX38) the emitter of which is to ground, while the collector is connected to one end of the coil B2, which, protected by C28, 100 kpF and by the diode D 11 (1N4004), controls, when excited, the switch SW6 and moves it from the rest position indicated in the diagram of figure 6 to the other position so that the DLDE is supplied at the connecting terminal n with the positive at + 12 V through the terminals TE 14 and TE 16, and at the connecting terminal p with the ground through TE 12 and TE 13, SW 5 being in rest position.

From the pin 13 departs the circuit ALCI controlling the flashing of the direction indicators, which includes the resistor R35, 33 ko, the transistor T11 (BCX38), the emitter of which is to ground while the collector is connected with an end of the coil B3, protected by the capacitor C29, 100 kpF and by the diode D12 (1N4004), which controls, when excited, the switch SW 7 which, when closing, supplies through the terminals TE2 and TE3, the direction indicators with the + 12 V coming from the point P1 of the supplying circuit.

The pin 11 is connectable to the circuit ADCI controlling the alarm siren through the bridge E 1 and the diode D13 (1N4148), while the pin 12 is permanently connected to the said circuit through the diode D 14 (1N4148), the said circuit comprises beginning from the said diodes the resistor R36, 22 ko, the transistor T 12 (BCX 38), the emitter of which is to ground and the collector of which is connected to the negative end of the coil B4, which, protected by the capacitor C 30, 100 kpF and by the diode D 15 (1N4004), closes, when excited, the switch SW8 so supplying through the terminals TE10 and TE11 the alarm siren SI, the said terminals are connected one to the other by the voltage limiter GM4 (Ge-Mov II of the Generale Electric) and TE10 is connected with the pull-down composed of the resistor R37, 10 ko connected to ground.

The pin 11 is moreover connected through the bridge E2, in case the ATS is prepared also for antirobbing operation, to the circuit ELCI locking the engine and i. e. opening the supplying of the circuits EOCI. ELCI also comprises beginning from E2 the resistor R38, 33 ko, the transistor T13 (BCX38), the emitter of which is to ground, while the collector is connected to the negative end of the coil B5, protected by the capacitor C31, 100 kpF and by the diode D16 (1N4004), and which controls when excited, SW9, which by opening locks the engine. To the pin 18 is connected the circuit LCCI, which checks the locked or unlocked position of DLDE and i. e. of the door locks. Said circuit begins from the terminal TE9, which is connected to DLDE so that when the DLDE is in locked position and i. e. the door locks are locked TE 9 is low, while if DLDE is in unlocked position and i. e. the locks are unlocked TE 9 is high. The pin 18 is connected to TE9 through the circuit which comprises beginning from TE 9 the diode D17 (1N4004), the resistor R39, 222o, the filter comprising the diode D 18 (1N4004) and the capacitor C 32, 4,7 miF connected to ground, the resistor R40, 10 ko which connects said circuit with the supply at + 5V coming from the point P5 and moreover the inverter Schmitt trigger IN7, which is part of the integrated circuit IC5, composed of a Hex Inverting Schmitt Trigger MM74C14N of the National Semiconductor, comprising six of said units, five of which (IN7, IN8, IN9, IN10, IN11) are used in the circuits of the module ATSO IIIa and the sixth IN12 is used in the input module IIIb.

The pin 7 is connectable to ground, with pin 14 or open depending upon the arrangement of the bridge E3, said positions of the bridge corresponding respectively to the arrangement of an alarm lasting 60, 30 or 180 sec.

The pin 14 is connected to the circuit ARCI of the antirobbing which begins from the terminal TE4.

Said circuit ARCI comprises beginning from the point P7 the resistor R41, 100 ko, the point P8, which is connected to P5 at + 5 V through the diode D19 (1N4004), R42, 10ko, 1N8, the point P6 and the diode D20 (1N4148).

To said circuit ARCI is connected the circuit PDCI which checks the state of opening or not of the driver's door, and which begins from the terminal TE6. The state of TE6 depends from the state of opening or closure of the said door and i. e. it is high when the door is closed and low when the door is open.

Said circuit comprises beginning from TE6 the resistor R43, 3,3 ko, D21 (IN4004), the time constant unit R44, 820 ko and C33, 10 miF, the inverter IN9, preceded by the protection diode D22 (1N4004), R45, 10 ko connected to the base of the transistor T14 (BC182B), the emitter of which is to ground, while the collector is connected through C34, 10MiF to the point P8 of the aforesaid supplying circuit of the pin 14, and directly to the point P9 of the reset circuit of the pin 17. From the pin 8 departs the circuit DSCI of arming and disarming of the ATS and i. e. of supplying of the sensors SS through TE8 and of the module US through TEM.

Said circuit comprises beginning from the pin 8 the two inverters IN10 and IN11 in series for strengthening of the positive signal of the pin 8 when the latter is sent high by IC4, the point P10 which is connectable to the engine lock circuit through the bridge E2, if the ATS is arranged without the antirobbing cycle, the resistor R46, 4,7 ko, the transistor T15, (TIP 121), the emitter of which is to ground and the collector of which is connected to TE8 through the thermistor TR1 (Ceramic P.T.C. Thermistor C955 of Siemens), and the resistor R47, 1 o and 1w, and to TEM through D9 and C26.

The reset pin 17 is connected to the point P5 at + 5 V of the supplying circuit through the resistor R48, 47ko and the diode D23 (1N4148) and to ground by means of the capacitor C35, 220 kpF, and moreover to the reset circuit RECI through the collector of the transistor T16 (BC182B), the emitter of which is connected to the pin 8, while the base is connected to the point 7 downstream of the terminal TE4 at + 12 V.

The said circuit comprises beginning from TE4 the diode D4, the point P7, the resistor to ground R101, 3,3 ko as pull-down, the resistor R49, 3,3 ko, the point P9 connected to P5 at + 5V through the diode D24 (1N4004), the resistor R50, 100 ko, the point P10 connected to P9 also through the discharge diode D25 (1N4004), the electrolytic capacitor to ground C36, 10 miF, the resistors R51 and R52, both of 47 ko and the said transistor T16.

The pin 19 is connected to the point P2 at + 12 V of the supplying circuit through the sabotage circuit SACI, comprising starting from P2 the resistor R53, 10 ko, the electrolytic capacitor C37, 1 miF, the diode D26 (1N4004), the resistors R54, 100 ko and R55, 47 ko, the transistor T17 (BC182B), the base of which is connected downstream of R54, while the emitter is to ground and the collector is connected to the + 5V of the point P5 through the resistor R56, 10 ko, and to the capacitor C 38, 10 kpF to ground to the said pin 19.

The terminal TE7 is connected to ground.

Alarm input module IIIb.

The alarm input module IIIb comprises the integrated circuit IC6, which is a voltage comparator LM393 of the National Semiconductor having two independent units IC6a and IC6b with a total of 8 pins, oF which the pin 8 of IC6a is connected to ground through the elecrolytic protection capacitor C39, 47 miF and is supplied at + 10,6 V through the diode D28 (1N4004) and the terminal TEE at + 11,2 by the point P3 of the supplying circuit SUCI, while the pin 4 is connected to ground.

The pin 3 is connected through R57, 8,2 ko, R58, 22 ko and the electrolytic capacitor C40, 10 miF and the diode D29 (1N4004) to the terminal TEB which is itself connected to the sensors SS, and through R59, 10ko to the collector of the transistor PNP T18 (BC212B), the emitter of which is connected at + 11,2 V to the terminal TEE, while the base is connected through the resistor R60, 8,2 ko to the point P11 connected to the terminal TEE through the resistor R61, 100 o and 2 w and directly to the supplying terminal TEI, normally at + 10V in relation to the value of R61, of the module US IIIc.

The pin 2 is connected through R62, 10 ko to the point P12 of the supply at + 10,6 V downstream of D27, while the output pin 1 is connected to the terminal TED and therefore to the pin 4 of continuous alarm of IC4 of the module ATSO IIIa. The pin 5 of IC6b is connected through the resister R63, 10 ko and the electrolytic capacitor to ground C41, 4,7 miF respectively through R61 to the terminal TEE at + 11,2 V and directly to the terminal TEI supplying the module US IIIc.

The pin 6 is connected to ground through R64, 100o, and through R65, 27 ko to the point P12 at + 10,6 and in addition through R66, 3,3 ko to the terminal TEB.

The pin 4 is connected to ground and the output pin 7 is connected to the terminal TEC and therefore to the three cycle alarm pin 3 of IC4 of the module ATSO IIIa. The said pin 7 is connected moreover through R67, 10 ko to the point P5 at + 5 V and through the parallel of R68, 470 ko and of the diode D29 (1N4148), the inverter IN12 of IC6 and the diode Zener D21, 5 V to pin 2 of IC6a and upstream of IN12 to ground through the capacitor C42, 10 miF.

The input module IIIb comprises in addition the diode SCR1 (BRX46) the cathode of which is connected through the electrolytic capacitor C43, 10 miF to the terminal TEF connected itself with the point P1 at + 12 V of the CIAL, and through the parallel of C44, 10 kpF and R69, 100o to ground. The grid of SCR1 is connected to ground through R70, 1 ko, while the cathode of SCR1 is connected to the pin 3 of IC6a through the resistor R71, 220o. The terminal TEA is connected to ground.

Ultrasound module US IIIc.

Said module is connected to the input module through a cable with four conductors, one of which is connected to the terminal TEI, one to the terminal TEM and one to the terminal TEA to ground, while the fourth conductor connects the output terminal TEU of the receiving module IIa, which is located inside the housing of the module US to the input pin 7 of the integrated circuit IC3 of the decoding module IIb. The supplying of the module US IIIc and of the receiving module IIa occurs therefore from the circuit connected to the terminal TEI and including the filter electrolytic capacitor to ground C45, 2,2 miF, the voltage regulator LM2, composed of the stabilizer LM2931 of the National Semiconductor, the electrolytic capacitor to ground C46, 100 miF and the point P13 at + 5 V.

The module US comprises an emitter TX and a receiver RX for ultrasounds, TX being actuated by an oscillating circuit composed of a resonator R12, 40 kHz, of the inverser IN13, IN14, IN15, IN16, which are units of the integrated circuit IC7 composed of a Hex Inverting Schmitt Trigger MM74C14 of the National Semiconductor, supplied at + 5V from the point P13 through IN14 and to ground through IN16.

The receiver RX is connected in output to the coupling capacitor C47, 1 kpF and is provided with the capacitor C48, 330 pF and with the resistor R75, 120 ko which are connected to ground, C47 is connected hence to the base of the amplification transistor T19 (BC239), the emitter of which is connected to ground and the collector of which is connected to the base through R76, 5,6 Mo and to the point P13 at +5 V through R77, 15 ko and through the coupling capacitor C49, 1kpF to the base of the amplifying transistor T20, the emitter of which is connected to ground through R78, 6,8 ko and directly to the collector of the feedback transistor T21 (BC239C), the emitter of which is connected to ground. The collector of T20 is connected to the base through R79, 5,6 Mo and to the point P13 at +5 V through R80, 15 ko and to the point P14 through the levelling unit comprising the coupling capacitor C50, 1kpF, the diode D30 (AA117) to ground, the diode D31 (AA117), the resistor R81, 47 ko and the capacitor C51, 22 kpF both the ground, the point P14 being hence connected through the capacitor C52, 22 kpF to the pin 3 of the integrated circuit IC8, composed of a LN358 Low Dual Operational Amplifier of the National Semiconductor, which includes i. e. two units IC8a and IC8b. The pin 3 of IC8a is connected moreover with the +5 V of the point P13 through R82, 220 ko and to ground through R83 also of 220 ko. The pin 8 of IC8a is connected with the supply at +5 V of P13, while the output pin 1 and the pin 2 are connected one to the other with the feedback unit comprising the trimmer RV1 from 0 to 1 Mo and the R84, 10 ko, and in parallel to these the filter composed of the capacitor C53, 1 kpF, being the pin 2 connected moreover to ground through R85, 10 ko and the electrolytic capacitor C54, 1 miF. The output pin 1 of IC8a is connected to the base of the transistor T21 (BD182B) through the capacitor C55, 1 miF, which base is moreover connected to ground by the diode D32 of discharge of C55 and by the resistor R86, 47 ko. The emitter of T22 is connected to ground, while its collector is connected to the +5 V of P13 through R87, 220 ko, and through R88, 15 ko, the electrolytic capacitor to ground C56, 2,2 miF, R89, 220 ko, the point P15, R90, 100 ko, the point P16 connected to the +5 V (P13) through the diode D33 (1N4148), the inverter IN17 and R91, 8,2 ko to the base of the transistor T23 (BC182B), the emitter of which is connected to ground and the collector of which is connected to the terminal TEI through R92, 100 o and to the anode of the LED, the cathode of which is connected through R93, 2,2 ko to the terminal TEM and moreover through the unit comprising D34, (1N4148), the electrolytic capacitor (C57, 2,2 miF and R94, 2,2 Mo to ground, and the diode D35 (1N4148) to the point P15 upstream of R90. The second unit IC8b of IC8 has the input pin 6 connected with the point P14 upstream of the pin 3 of IC8a, while its pin 5 is connected to ground through the parallel of R95, 22 ko and of C58, 100 kpF and to the positive at +5 V of P13 through R96, 100 ko. The pin 4 is connected to ground, while the output pin 7 is connected through R97, 820ko, R98, 47 ko and the electrolytic capacitor C59, 47 miF to ground at the base of the transistor T21 (BC239C). The output pin 7 of IC8b is moreover connected through the unit D36 (1N4148), R99, 3,3 ko, R100, 3,3 Mo, the electrolytic capacitor C60, 2,2 miF to ground, and the inverter IN18 and the diode D37 (1N4148) to the point P16 upstream of 1N17.

Operation of the ATS.

The antitheft system ATS now described is able to carry out the following functions: normal alarm function after its arming in case of a theft attempt, antisabotaging alarm if the supplying connector of the main dashboard or of the ATS are reconnected after having been disconnected, antirobbing function if the driver is compelled out of the motor-vehicle with the engine running, with delayed alarm and engine lock, panic function if a suspect person is hanging about the motor-vehicle and/or the driver out of but near the vehicle, and the driver wants to actuate the acoustical signal devices and the warning lights in order to dissuade the suspect person, which function is carried out by the ATS whether armed or disarmed.
Preparation of the ATS before its installation and its connection.
Before installation the bridges E1, E2 and E3 have to be prepared.
E1 in order to determine if the siren shall have to sound in said periods continuously or intermittently.
E2 in order to determine if the antirobbing device has to be made operative or not.
E3 in order to determine the duration of the alarm in 30 or 60 or 180 seconds.

Installation and connection of the supply of the ATS.

After installation, the connections of the ATS to the SUCI supply circuit is made by closing the switch SW3 and simultaneously opening the SW4, controlled with the disconnection of the key K1 for connection of the supply of the ATS, located on the siren SI.
The integrated circuit IC4 which is the heart of the ATS has been masked with such a program as to perform the following functions: IC4, as soon as supplied, actuates the resonator RI1 and therefore the oscillatory system (clock), hence the pin 17 goes high through R 48 and consequently the state of the pin 19 is checked. The pin 19 can be low only if a sabotage is occurring, as in this case after disconnection of the supplying connector from the ATS system which includes also the supplying connection of TE4 and i. e. of the circuits EOCI and which therefore has to be reconnected in order to allow the engine operation, upon said reconnection C37 charges in 3 or 4 tenths of sec thus causing a positive impulse on the base of T17 which brings therefore its collector to ground and consequently the pin 19. In the case the pin 19 is low IC4 checks the state of the pin 7 in order to insert into the program the pre-established time of duration of the alarm cycles and inserts the part of the program which is common to the sabotage and the antirobbing alarm and i. e. the pin 8 is brought high, the pin 17 remains high, T16 does not conduct even if in the meantime a positive reaches its base, the pins 11 and 12 are brought high and therefore the alarm starts, continuous or intermittent depending upon the arrangement of the bridge E1, the alarm is composed if continuous of a continuous sound for 30, 60 or 180 sec depending upon the arrangement of the bridge E3, if intermittent of sounds of 1,3 sec at intervals of 1,1 sec for the aforesaid duration. The said cycles of 30, 60 or 180 sec continue to be repeated with pauses of 4 sec one from the other if the cycles are continuous sounds as well as if they are intermittent sounds.
If the ATS has been arranged with the bridge E2 also for the antirobbing function the pin 11, when going high, actuates the ELCI circuit for engine lock with the consequent opening of SW9.
When a sabotage is occurring the pins 11 and 12 are immediately brought high, in case of antirobbing they are brought high after 33 sec in order to allow the robber to go away from the driver, and therefore only after such delay the siren starts sounding and the engine locks.
If the pin 19 is high, as T17 is not in conduction as C37 does not conduct being charged, IC4 checks the state of the pin 7 in order to determine the duration of the alarm, and checks then cyclically the state of the pins 5 and 6.

Control of ATS through the key TA1.

When the user presses the key TA1 the remote control transmits the message 1 continuously, which anyhow stops after 3 sec even if the key remains depressed, while the buzzer PB continues sounding all the time TA1 remains depressed independently from stopping of the message.
The message picked up by the radioreceiving section installed on the motor-vehicle is transmitted by the latter amplified in low frequency to the decoding section and if the coding corresponds to the message 1 the integrated circuit IC3 sends a positive impulse of 1,5 seconds from its pin 9, which impulse arrives to pin 6 of IC4, which on the base of its program performs the following operations:

- checks if its is unlocked and i. e. if the pin 17 is high and therefore if it is in the state of operation waiting for controls,
- if so, it checks the state of the pin 8 and i. e. it checks if the ATS is armed and i. e. if the pin 8 is high or if it is disarmed and i. e. the pin 8 is low.

ATS disarmed.

- if the pin 8 is low and i. e. ATS disarmed the MP checks the state of the pin 14,
- if it finds it high and i. e. the key K2 is not inserted and therefore the engine is not running, it brings the pin 8 high and therefore through the circuit DSCI it brings the terminals TE8 and TEM low and so brings in operative condition the sensors and the module US and i. e. it arms the ATS, moreover if the ATS has been prepared without the antirobbing cycle through the bridge E2 the high at point P10 of said circuit controls through T13 the opening of SW9 which causes the interdiction of all electric circuits EOCI essential for operation of the engine, which remains so locked, the high at pin 8 does not control the engine lock if the ATS through the bridge E2 is prepared for the antirobbing cycle.
- IC4 sends to the pin 13 two positive impulses of 0,4 sec each at an interval of 0,65 sec, which through the circuit ALCI of the direction indicators causes their flashing with two flashes of 0,4 sec at an interval of 0,65 sec, which warning light informs the user that the ATS has been connected;
- checks the state of the pin 18 which, through the circuit LCCI which checks the state of DLDE, is connected to the terminal TE9, if the locks are locked TE 9 is low and consequently the pin 18 high, and vice versa; therefore if the locks are checked to be locked it does not perform further operations;
- if the locks are unlocked IC4 sends a positive impulse to the pin 1 which through the arranged circuit controls locking of SW6 and therefore locking of the locks;
- after 5 sec the state of the pin 18 is checked again in order to have confirmation that the locks have been locked and i. e. that the pin 18 has gone high,
- if the pin 18 is found low and i. e. the locks have not been locked a positive impulse of 1 sec is sent to the pin 12 for 1 sec actuation of the alarm siren SI which informs the user that the locks have remained unlocked.

ATS armed.

If the pin 8 is high and i. e. the ATS is already armed, the control of TA1 is intended by IC4 as a control to disarm the ATS and therefore,

- the pin 8 is brought low and therefore supply is taken off to the sensors and to the module US taking off the supply ground to the terminals TE8 and TEM.
- only one positive impulse of 0,4 sec is sent to the pin 13 and therefore through the arranged circuit the direction indicators are actuated for only one flash of 0,4 sec, which signal informs that the ATS has been disarmed;
- the state of the pin 18 is checked in order to check if the locks are locked or not,
- in the case the pin 18 is low and therefore TE9 high the locks are already unlocked and therefore the ATS disarming program is out with the said checking;
- if on the contrary the pin 18 is found high and therefore TE9 low i. e. the doors locked a positive impulse is sent to the pin 20 which actuates through the arranged circuit the switch SW5 which causes unlocking of the locks.

Operation of the ATS after its arming.

After its arming the ATS becomes operative only after 44 sec inhibition. If after this time an alarm reaches pin 4 for continuous alarm from the terminal TED of the input section IIIb, corresponding to the signaling by one or more sensors SS, the pins 11 and 12 are immediately sent high, the 11 with a continuous positive impulse for the time of 30, 60 or 180 sec depending upon the arrangement of the bridge E3 and the pin 12 for the same time with intermittent impulses of 1,3 sec at 1,1 sec intervals, which determine closing of SW8, continuous or intermittent depending upon the arrangement of the bridge E1 and hence a continuous or intermittent acoustical signal of 1,3 sec signal and 1,1 sec pause for 30, 60 or 180 sec.

- if the ATS has been prepared through E2 to perform also the antirobbing function the pin 11 through the circuit ELCI for engine lock causes opening of SW9 and i. e. the immediate stopping of supplying of the circuits EOCI and the engine is so locked, if on the contrary the ATS has not been prepared for antirobbing cycle the said interdiction through SW9 has already occurred upon arming of the ATS through the pin 8.

- IC4 sends then to the pin 13 intermittent positive impulses of 0,5 sec with 0,6 sec intervals all over the duration of the alarm in order to actuate through ALCI the direction indicators with flashes at intervals equal to those of the aforesaid impulses.

- following to the continuous alarm an intermittent impulse of 0,3 sec with intervals of 4 sec is sent to pin 4, causing the corresponding intermittent supplying of the LED which however starts flashing only after the ATS is disarmed, as during the arming of the ATS the LED is supplied continuously, and stops flashing only when the key K2 is inserted into the main dashboard, the LED thus being memory of the alarm and of its type.

If the alarm comes from the terminal TEC for alarm signaling of the module US, the alarm arrives to the 3 cycle alarm pin 3, in this case a similar operation program of IC4 takes place, only that the cycle of alarm and i. e. of the alarm impulses to the pins 11 and 12 for acoustical alarm and to the pin 13 for warning light of the direction indicators, is repeated at the most three times until disarming of the ATS.

In said case the intermittent signal outcoming from the memory of IC4 and bringing the pin 9 high is of two 0,3 sec impulses separated by an interval of 0,3 sec and repeated after a pause of 4 sec and therefore the flashing of the LED occurs with the said intermittance.

Antirobbing cycle operation.

The control of the antirobbing cycle is given by a control of TA1 and hence by a positive impulse of 1,5 sec to pin 6 of IC4.

Two conditions are required to cause the antirobbing alarm cycle program to start:

- the engine must be running,
- the driver's door must be open.

If only the first condition is complied with and i. e. the engine is running and the driver's door is not open, the key K2 is inserted into the main dashboard and therefore we have + 12 V at the terminal TE4 which through the circuit D4, R49, P8, R50, P10, C36, R51, R52, R52 brings in conduction T16 which with its collector keeps the pin 17 low, as its emitter goes to ground being the pin 8 kept low by IC4, the ATS not being armed and therefore IC4 is locked.

If on the contrary the engine is running and the driver's door is open the TE6 is low and therefore through R43, D21, R44, C33, D22, IN9, and R45 it brings in conduction T14, which brings P9 to ground and therefore interdicts T16, discharging C36 through D25, P9, collector and emitter of T14, and therefore the pin 17 is brought high and as a consequence IC4 is unlocked.

The pin 17 remains high also during the 10 sec which follow closing of the door as the memory R44xC33 keeps T14 in conduction for the said time of delay after closing of the door.

Moreover, being the key K2 inserted, by TE4 through D4, R41, P8, R42, IN8, P6, D20 the pin 14 is kept low. Being moreover the point P6 low, through D7 the base of T8 is kept low, so that the control signals outgoing from the pin 9 when the pin 17 is low do not switch the LED on through TEM.

If in these conditions and i. e. with pin 17 high and pin 14 low, an impulse arrives to pin 6, IC4 brings immediately high the pin 8 and after 33 sec it sends the continuous alarm impulses to the pin 11 and the intermittent alarm impulses to the pin 12 and to the pin 13 the intermittent impulses provided for alarm flashing of the direction indicators.

It follows that through the pin 11 after the 33 sec through the bridge E2 the switch SW9 is opened and therefore the engine locked, and moreover, depending upon the arrangement of E1, the continuous or intermittent acoustical signal starts.

The antirobbing and the antisabotaging cycle can be interrupted only by opening and subsequent closing of SW3 and i. e. of the SUCI, and not through the remote control.

Operation of the panic control with TA2.

By pressing TA2, SW2 closes and from the encoding section a sequence of messages 2 start from the pin 9 of IC1, which messages differ from the messages 1 only for the eleventh bit. Said messages transmitted by the section la of the remote control are picked up by the radio-receiving section IIa installed on the motor-vehicle which transmits said messages, appropriately amplified in low frequency, to the decoding section IIb which after having checked that the messages have the code 2 sends a positive impulse of 1,5 sec from pin 11, which impulse is received through the pin 4 by IC4, which sends immediately high the pins 11, 12, 13 and keeps them high 10 sec long, after which, even if TA2 is still depressed, said pins go low again and so remain at least 4 sec long, after which if the key is still depressed or is pressed again the panic control causes a new 10 sec alarm and so on.

If the pin 8 is already high and i. e. the ATS is already armed, upon arrival of the impulse to pin 5, the pin 8 remains high, if on the contrary the pin 8 is low as the ATS is not armed, it is brought high 10 sec long plus the 4 sec interdiction and during the said time of 14 sec the ATS remains armed, after the 14 sec have elapsed the pin 8 is brought low again and therefore the ATS is automatically disarmed.

If the key TA2 is kept depressed or is re-depressed in the 10 sec panic alarm and then released the panic alarm continues sounding only for the predetermined 10 seconds.

When the pins 11, 12, 13 are high the siren is continuously or intermittently actuated, depending upon the arrangement of the bridge E1, 10 sec long in the case of normally timed intervals and i. e. with sounds of 1,3 sec and pauses of 1,1 sec, while the direction indicators flash with the normal alarm time and i. e. flashes of 0,5 sec at intervals of 0,6 sec. During the panic alarm if the ATS is prepared with the bridge E2 for the antirobbing function, the pin 11 when going high locks the engine by actuating the lock circuit ELCI and i. e. by causing SW9 to open.

Operation of the alarm input module.

After connection of the supply of the ATS with the closure oaf the switch SW3 the alarm input module is supplied through the terminal TEE at +11,2V connected to the point P3 of the circuit SUCI. The pin 3 of IC6a is kept at +7 V by the transistor T18 which conducts as the point P12 is at +10 V and therefore the base of T18 is lower that the emitter (+11,2 V) while the pin 2 is at +5 V in relation to the value of R62, therefore the outlet pin 1 is kept high and so is the terminal TED connected thereto. The pin 5 of IC6b is kept at +10 V through P12 and R61 and the pi 6 at +8,5 V through R65, and the outlet pin 7 is kept therefore high and so is the terminal TEC.

When a negative value arrives to the terminal TEB for alarm signaling from one of the sensors the pin 3 decreases to a level lower than the one of the pin 2 and therefore the outlet pin 1 going low causes a low at the terminal TED and therefore at the pin 4 of IC4 for continuous alarm and causes therefore the relevant alarm cycle to start, while when a negative arrives to the terminal TEI because an alarm arrives from the module US the pin 5 lowers in respect of pin 6 and from the outlet pin 7 of IC6b starts a negative which through TEC arrives to pin 3 of IC4 and causes the three cycle alarm cycle to start.

Moreover when the driver's door is opened and as a consequence the courtesy light (for the driver's entering) goes on, the voltage at the terminal TEF lowers and the cathode of the SCR1 goes still lower than the grid which is already low, it follows that the anode goes so low as to cause the level of the pin 3 to descend below the one of the pin 2, and this causes a negative in output from the pin 1 and therefore through TED and the pin 4 of IC4 a continuous alarm cycle. The input module signals moreover the sabotage attempts of the module US for supplying cut-off as well as for short-circuiting of the same, as well as, in addition, in case of obstruction of the emitting and/or receiving surfaces of the US module. In fact if the supplying from TEI is cut off the point P11 goes at +11,2 V as no current passes through R61 and therefore T18 is interdicted and as a consequence the pin 3 of IC6a going low from the pin 1 starts a negative impulse which through TED arrives to the pin 4 of continuous alarm of IC4. If on the contrary TEI is short-circuited to ground the pin 5 descends below the value of the pin 6 of IC6b and from pin 7 starts a negative impulse which through TEC arrives to the pin 3 of IC4 of three cycle alarm. On the contrary, if one or both heads of the module US are blinded the terminal TEI remains low even after the end of the alarm and i. e. after the 30, 60 or 180 sec, and as a consequence also the pin 5 of IC6b remains low and so does also the pin 7 which, having discharged through C42 to a value lower than +2,5 V through the inverter IN12 brings high at least to +5 B the anode of DZ1 the cathode of which rises at least at +10 V consequently sends the pin 2 at a level higher than the one of the pin 3 determining as a consequence a negative impulse to pin 1 which causes starting of the continuous alarm cycle through TED and the pin 4 of IC4, of course the starting of the continuous alarm occurs also in the case of non-blinding of the heads but if the inside movement lasts beyond the duration of the alarm, which case can anyhow occur seldom.

Operation of the module US IIIc.

The said module is supplied at +10 V by the conductor which is connected to the terminal TEI, and at +5 V by the point P13 downstream of LM2. The oscillating circuit of the resonator RI2 actuates the ultrasound emitter TX and the receiver RX, which picks up the reflected ultrasounds, and transmits downstream all the frequency changes occurring following to the presence of persons moving within the range of action of TX and i. e. inside the motor-vehicle being the module in the example located below the rearview mirror.

The said changes are amplified by the transistor T19 and therefore in a much higher degree in the second stage of amplification composed of the transistor T20, the said amplified oscillations are transmitted through the collector of T20 to the levelling unit (C50, D30, D31, C51, R82) which transmits the consequent positive pulsing signal to the point P14 and hence to the pin 3 of the amplifier IC8a the pin 2 of which is kept low through the feedback unit, the point P14 is connected moreover to the pin 6 of the unit IC8b which has functions of comparator, in fact its pin 5 is kept high at least at +1 V through R96, therefore every time the positive signal in P14 decreases in intensity and i. e. decreases below +1 V, a positive impulse starts from the pin 7, which impulse brings in conduction the transistor T21 of feedback of T20, thus increasing the conduction of the latter with the consequent intensification of the signal in P14, the intensity regulation occors slowly in relation with the time constant (R97, R98, C59). The voltage peaks amplified by IC8a bring T22 in conduction, which by means of its collector going low brings high through the inverter IN17I the base of T23 which, thus going in conduction, brings the terminal TEI low, so causing a negative through TEC to the three cycle alarm pin 3 of IC4 which causes the alarm to start.

In the case of blinding of one or both heads of the module the receiver does nomore receive reflected ultrasounds and therefore the point P14 remains at zero and consequently the output pin 7 of the comparator IC8b remains positive and therefore through the masking unit (D36, R99, R100, C60), IN18 and D37 keeps the point P16 low and therefore through IN17 and R91, keeps in excitation T23, the collector of which keeps low the three cycle alarm terminal TEI, which however in this case, the blinding persisting beyond the duration of the alarm, causes also the continuous alarm to start.

During all the time the module US detects movements inside the motor-vehicle and i. e. the time of alarm, the collector of T23 brings also the anode of the LED low, which therefore goes out and so remains.

Upon arming of the ATS the terminal TEI goes high while TEM goes low through D9 and T15, therefore the LED lights, so indicating that the ATS is armed. The LED goes out on the contrary during the alarm of the module US, and it lights again as soon as the alarm ceases. Moreover, as soon as the alarms coming from the sensors (TEB) as well as from the module US (TEI) cease, the integrated circuit IC4 sends intermittent positive impulses to the pin 9, which impulses bring in conduction T8, which in turn sends negative impulses with the same intervals to TEM, therefore the LED would flash if it were not constantly held lighted by TEM which through T15 is constantly kept low as long as the ATS is armed. After disarming of the ATS the LED starts to flash if alarms have occurred, the MP being so programmed that the impulses from the pin 9 continue to be sent and therefore the LED to flash as long as the key K2 is not inserted.

The LED lights as soon as the IAF is armed and the driver can immediately check the operation of the module US although the ATS is inhibited during 44".

In fact the initial inhibition is provided for in the program of the MP in the sense that it receives the alarm signals at the pins 3 or 4 which are immediately sent by the sensors or by the module US if the alarm conditions occur but the impulses to the pins 11 or 12 and 13 to the circuits ADCI and ALCI do not start and therefore when moving a hand in front of the module US the LED goes out but no alarm starts.

## Claims

1. Antitheft system ATS for motor-vehicle composed of a portable remote control (1), comprising an encoding module (1a) with a control key (TA1), a radio wave or infrared or other type transmitting module (Ib) and a power source (MB), and of a device (II, III) installed on the motor-vehicle comprising a receiving module (IIa) of the same type as the transmitting one, a decoding module (IIb), a module ATSO (IIIa) for operation of the antitheft system, an alarm input module (IIIb) from the detectors, which detectors consist, for example, of contact sensors, ultrasound modules, anti-lifting devices and detectors of any other type, suited to arm the system when the remote control key is actuated, if the system is disarmed and the supplying of the electric circuits EOCI essential for operation of the engine is disconnected, to disarm the ATS system when the remote control key is actuated, if the system is armed and to actuate the alarm in case of sabotaging of the system itself, characterized in that the module ATSO (IIIa) for operation of the antitheft system and the alarm input module (IIIb) from the detectors include such electric and electronic circuits, that is, are composed of components, discrete and not, so connected, as to be suited to accomplish also an antirobbing alarm function when the remote control key (TA1) is actuated while the ATS is disarmed and the EOCI circuits are connected and simultaneously the driver's door is open, that is in the case which occurs when a robber compels the driver out from the motor-vehicle with the engine running or anyhow with the key of the main dashboard of the motor-vehicle inserted and i. e. with the EOCI circuits on, and with the door open and the driver actuates the remote control key (TA1), normally the reserve one which he keeps in the pocket, while he gets out from the vehicle or immediately after, providing the door is still open, the said function of antirobbing alarm consisting of an acoustical and/or other type of alarm, and of disconnection of the EOCI input, that is the locking of the engine itself.

2.  System as claimed in claim 1. characterized in that the module ATSO (IIIa) comprises such electric and electronic circuits and i. e. including components, discrete and not, such and so connected that the antirobbing alarm occurs with a predetermined delay from actuation of the remote control by the driver so that the robber goes away with the vehicle from the driver before the said alarm occurs, sufficiently to prevent the robber from reacting against the driver.

3.  System as claimed in claim 1. and 2. characterized in that the ATSO module (IIIa) comprises such memory circuits (R44xC33) as to allow the antirobbing alarm control to be given even within a predetermined time after the door of the driver is closed.

4.  System as claimed in any one of the previous solutions characterized in that the ATSO module (IIIa) comprises a microprocessor MP and at least following electronic circuits:
    -   a circuit SACI for sabotage warning,
    -   a circuit RECI for resetting of MP,
    -   a circuit PDCI for unlocking of the MP when the EOCI are connected but the driver's door is open,
    -   a circuit DSCI for arming and disarming of ATS, and that is for supplying the alarm detectors,
    -   a circuit ARCI for signaling to MP that the antirobbing conditions occur, that is EOCI connected and driver's door open,
    -   a circuit LCCI to check the conditions of locking or unlocking of the device DLDE for locking the door locks,
    -   a circuit ADCI for actuation of the acoustical and/or of other type of alarm warning devices,
    -   a circuit DLCI for locking the DLDE and viz. the door locks,
    -   a circuit DUCI for unlocking the DLDE and viz. the door locks,
    -   a circuit ALCI actuating the alarm warning lights,

and the said circuits consist of components, discrete and not, such and so connected one to the other, to the microprocessor, to the circuit SUCI supplying the modules of the ATS installed on the motor-vehicle and to the other elements of the motor-vehicle connected to the ATS in such a way, and the MP is provided with ROM masked upon manufacture with such a program that the ATS is suited to effect the following operation:
    -   the MP as soon as connected (SW3) with the supply after having been installed on the motor-vehicle actuates the clock oscillating system (RT1, R28, R29),
-   the reset pin (17IC4) is brought up and hence the MP is unlocked,
-   the MP checks through the circuit SACI if a sabotage is occurring,
-   if not, the MP goes continuously to check the state of the pin (6IC4) of control input from the decoding module (IIb) as a consequence of a control given by the remote control (TA1),
-   as soon as a control impulse arrives for actuation of the remote control (I) the MP performs the following operations:
-   checks through the DSCI if the ATS is armed or not,
= = if the ATS is not armed the input control to the MP coming from the remote control (I) is intended as control for arming of the ATS, after the MP has checked that the driver's door is not open and the EOCI are not connected and hence the MP:
    -   arms the ATS by supplying through DSCI the alarm detectors,
    -   actuates through ALCI the special indicating lights, usually the direction indicators, for signaling to the driver that the ATS has been armed,
    -   checks through LCCI if the DLDE is in position of unlocking of the door locks,
    -   if so, actuates through the DLCI the DLDE to lock the locks,
    -   checks after some seconds through LCCI if the locks have been locked,
    -   if not, actuates one of the alarm detectors so that is sends a signal informing the driver that the locks of the doors have not been locked,
    -   if upon the first check of the DLDE it is found to be already in lock position the last three operations are not carried out;
= = if the ATS is already armed the input control coming from the remote control is intended as a control for disarming of the ATS and hence the MP:
    -   disarms the ATS through the DSCI by cutting off the supply to the alarm detectors,
    -   actuates, through the circuit ALCI, the arranged indicators, usually the direction warning lights, to inform the driver that the ATS has been disarmed,
    -   checks the state of the DLDE through LCCI,
    -   if it finds it in locked position actuates through DUCI the unlocking of the DLDE,
- if it finds the DLDE already in position of unlocking does not perform the previous operation;
= = = after arming of the ATS upon receiving by the module for alarm input from the detectors an alarm signal, the MP:
  - provides, through ADCI, to actuate the acoustical or other type of alarm warning devices according to the alarm cycles contemplated by the MP program,
  - provides, through ELCI, to disconnect EOCI circuits and hence to lock the engine,
  - actuates, through ALCI, the alarm warning lights;
= = = if the ATS is not armed, but the circuits EOCI are connected and the door on the driver's side is open, a control incoming to MP following to actuation of the remote control key (TA1) is intended by the MP as an antirobbing alarm control and therefore the MP:
  - immediately arms through DSCI the ATS,
  - and only after the predetermined delay actuates through the ADCI the alarm warning devices, acoustical and of other type, and through the ELCI the EOCI are disconnected and therefore the engine locked,
  - and causes the antirobbing alarm cycle to stop only by means of opening and subsequently closing (SW3) the supplying of the circuit SUCI and not by a control issued from the remote control (I).

5. System as claimed in claim 4. characterized in that the module ATSO (IIIa) comprises such circuits and MP is so programmed that the sabotage alarm of the ATS is caused not by the disconnection of the supply of the ATS but by the reconnection of the supply after it has been disconnected, and said alarm can only stop after reopening and closing of the ATS supplying switch (SW3).

6. System as claimed in any one of the previous claims characterized in that the module ATSO (IIIa) comprises such electronic circuits (E3, E1) and the MP is so programmed that it can pre-establish upon its installation the duration of time of the single operation cycles of the alarm warning devices and if said operation during said cycles must be continuous or intermittent.

7. System as claimed in any of the previous claims characterized in that the module (IIIb) for alarm input from the detectors comprises such electronic circuits and the MP is so programmed that the said module can select the alarm signals coming from distinct sets of detectors and send to the module ATSO (IIIa) distinct signals and this is suited to cause different alarms according to the set of detectors issuing the alarm signal.

8. System as claimed in any one of the previous claims characterized in that the ATS comprises among the alarm detectors an ultrasonic module (IIIc) and the latter is provided with one or more LED, so connected to the US module itself, to the input control and to the MP of the module ATSO and the MP is so programmed that one of the LED informs, by its lighting, that the ATS has been armed, that the same or another one informs by its going on or out that an alarm is running, caused by an alarm signal from the module US (IIIc), and that subsequently to each alarm one LED informs by intermittent lighting that an alarm has occurred and, based upon the intermittence, which set of detectors has given the alarm signal and in case such signal is made by the same LED which lightens to inform that the ATS is armed, the intermittent signal is sent only after disarming of the ATS and until the key (K2) is inserted into the main dashboard i. e. the circuits EOCI are connected.

9. System as claimed in claim 8. characterized in that the ultrasound module (IIIc) is mounted on the upper part of the windshield inside the motor-vehicle and in that in the same housing containing it is also mounted the receiving module (IIa) of the ATS so as to improve to the utmost the reception of the signals of the remote control (I) and hence to allow to provide the latter with a lower power source (MB).

10. System as claimed in claim 8. characterized in that the said LED are connected with such circuits and so that one of the LED can signal by going out or not, that an alarm is running which has been detected by the ultrasound module (IIIc) even during the time the ATS is cut out after its arming, this allowing therefore to effect operation tests in said interval of the module US without causing the alarm devices to become operating through ADCI and ALCI.

11. System as claimed in any of the previous claims characterized in that the alarm input module (IIIb) and the ultrasound module (IIIc) comprise electronic circuits suited, when the ATS is armed, to send alarm signals to the module ATSO (IIIa) when the module US (IIIc) is sabotaged and i. e. its supply is cut off or short-circuited, when the driver's door is opened and when the emitting or receiving surface of the ultrasounds of said modules is blinded.

12. System as claimed in any of the previous claims characterized in that the module ATSO (IIIa) comprises such electronic circuits (E2) that they can eventually be so prepared upon installation of the module and the MP so programmed that the module ATSO itself does not carry out the antirobbing program.

**Revendications**

1. Système antivol ATS pour véhicule automobile, composé d'une télécommande portative (1), comprenant un module de codage (1a) muni lui-même d'une touche de commande (TA1),, un module émetteur (1b) à ondes radio-électriques ou à rayons infrarouges, ou d'un autre type, et une source d'énergie (MB), et d'un dispositif (II, III) installé sur le véhicule automobile, comprenant un module récepteur (IIa), du même type que module émetteur, un module décodeur (11b), un module ATSO (IIIa) destiné à commander le système antivol, un module d'entrée d'alarme (IIIb) attaqué par les détecteurs, lesquels détecteurs consistent, par exemple en des capteurs à contact, des modules à ultrasons, des dispositifs anti-soulèvement et des détecteurs d'un autre type quelconque, appropriés pour armer le système lorsque la touche de la télécommande est actionnée, si le système est désarmé et que l'alimentation des circuits électriques EOCI essentielle pour le fonctionnement du moteur est déconnectée, pour désarmer le système ATS lorsque la touche de la commande est actionnée, si le système est armé et pour actionner l'alarme en cas de sabotage du système lui-même, caractérisé par le fait que le module ATSO (III) destiné à commander le système antivol et le module d'entrée d'alarme (IIIb) attaqué par les détecteurs comprennent des circuits électriques et électroniques, c'est-à-dire qu'ils sont composés de composants, discrets ou non, connectés de manière à être appropriés pour assurer aussi une fonction d'alarme antivol lorsque la touche (TA1) de la commande est actionnée alors que le ATS est désarmé et les circuits EOCI connectés et qu'en même temps, la porte du conducteur est ouverte, c'est-à-dire dans le cas ouí se produit lorsqu'un voleur contraint le conducteur à sortir du véhicule automobile alors que le moteur est en marche, ou que, de toute façon, la clé du tableau de bord du véhicule automobile est en place, c'est-à-dire alors que les circuits EOCI sont sous tension, et que la porte est ouverte et que le conducteur actionne la touche (TA1) de la télécommande, normalement la télécommande de réserve qu'il conserve dans sa poche, pendant qu'il sort du véhicule ou immédiatement après, pourvu que la porte soit encore ouverte, ladite fonction de l'alarme antivol consistant en une alarme acoustique et/ou d'un autre type, et en la déconnexion de l'entrée EOCI, c'est-à-dire le verrouillage du moteur lui-même.

2. Système selon la revendication 1, caractérisé par le fait que le module ATSO (IIIa) comprend des circuits électriques et électroniques, c'est-à-dire qu'il comprend des composants, discrets ou non, qui sont tels et connectés de telle façon que l'alarme antivol se produise avec une temporisation prédéterminée après l'actionnement de la télécommande par le conducteur, de sorte que le voleur s'éloigne avec le véhicule du conducteur avant que ladite alarme ne se manifeste, pendant un temps suffisant pour éviter que le voleur ne réagisse contre le conducteur.

3. Système selon les revendications 1 et 2, caractérisé par le fait que le module ATSO (IIIa) comprend des circuits de mémoire (R44 x C33) qui permettent de déclencher la commande de l'alarme antivol même dans les limites d'un temps prédéterminé après que la porte du conducteur a été fermée.

4. Système selon une quelconque des solutions précédentes, caractérisé par le fait que le module ATSO (IIIa) comprend un microprocesseur MP et au moins les circuits électroniques suivants :
   - un circuit SACS pour l'avertir du sabotage,
   - un circuit RECI pour le réarmement du MP,
   - un circuit PDCI pour déverrouiller le MP lorsque les EOCI sont connectés mais que la porte du conducteur est ouverte,
   - un circuit DSCI pour armer et à désarmer ATS, c'est-à-dire pour alimenter les détecteurs d'alarme,
   - un circuit ARCI pour signaler au MP qu'on est en présence de conditions antivol, c'est-à-dire que EOCI est connecté et que la porte du conducteur est ouverte,

- un circuit LCCI pour vérifier l'état de verrouillage ou de déverrouillage du dispositif DLDE qui sert à verrouiller les serrures des portes,
- un circuit ADCI pour actionner les dispositifs d'avertissement d'alarme acoustiques et/ou d'autres types,
- un circuit DLCI servant à verrouiller le DLDE et, c'est-à-dire, les serrures des portes,
- un circuit DUCI pour déverrouiller le DLDE ou c'est-à-dire les serrures des portes,
- un circuit ALCI pour actionner les feux d'avertissement de l'alarme,
- et lesdits circuits sont composés de composants, discrets ou non, qui sont tels et connectés de telle façon, les uns aux autres, au microprocesseur, au circuit SUCI qui alimente les modules du ATS installé sur le véhicule automobile, et aux autres éléments du véhicule automobile qui sont connectés au ATS de telle manière, et le MP est équipé d'une ROM masquée à la fabrication avec un programme tel que le ATS soit approprié pour effectuer l'opération suivante :
- le MP, dès qu'il est connecté (SW3) à l'alimentation après avoir été installé sur le véhicule automobile, actionne le système oscillant d'horloge (RT1, R28, R29),
- la broche de remise à zéro (17IC4) est mise au niveau élevé et, par conséquent, le MP est déverrouillé,
- le MP vérifie, par l'intermédiaire du circuit SACI si un sabotage est en train de se produire,
- sinon, le MP continue à vérifier l'état de la broche (6IC4) de l'entrée de commande arrivant du module de décodage (IIb) par suite d'une commande donnée par la télécommande (TA1),
- dès qu'une impulsion de commande arrive pour l'actionnement de la télécommande (I), le MP exécute les opérations suivantes :
- il vérifie par l'intermédiaire de DSCI si le ATS est armé ou non,
- = si le ATS n'est pas armé, la commande d'entrée aboutissant au MP, provenant de la télécommande (I) est destiné à commander l'armement du ATS après que le MP a vérifié que la porte du conducteur n'est pas ouverte et que les EOCI ne sont pas connectés et, par conséquent, le MP :

- arme le ATS en alimentant les détecteurs d'alarme à travers DSCI,
- actionne à travers ALCI les indicateurs lumineux spéciaux, habituellement les indicateurs de changement de direction, pour signaler au conducteur que le ATS a été armé,
- vérifie à travers LCCI si le DLDE est en position de déverrouillage des serrures des portes,
- dans l'affirmative, actionne à travers le DLCI le DLDE pour verrouiller les portes,
- vérifie après quelques secondes, à travers LCCI, si les serrures ont bien été verrouillées,
- dans la négative, actionne l'un des détecteurs d'alarme de sorte qu'il émet un signal informant le conducteur que les serrures des portes n'ont pas été verrouillées,
- si, à la suite de la première vérification du DLDE, on constate que celui-ci est déjà dans la position de verrouillage, les trois dernières opérations ne s'effectuent pas ;
= = si le ATS est déjà armé, la commande d'entrée arrivant de la télécommande est destinée à agir comme une commande pour désarmer le ATS et, par conséquent, le MP :
- désarme le ATS à travers le DSCI en coupant l'alimentation aboutissant aux détecteurs d'alarme,
- actionne, à travers le circuit ALCI, les indicateurs prévus, habituellement, les indicateurs lumineux de changement de direction, pour informer le conducteur que le ATS a été désarmé,
- vérifie l'état du DLDE à travers LCCI,
- s'il le trouve dans la position verrouillée, il actionne à travers DUCI le déverrouillage du DLDE,
- s'il trouve le DLDE déjà en position de déverrouillage, il n'effectue pas l'opération précédente ;
= = = après l'armement du ATS, qui fait suite à la réception d'un signal d'alarme par le module destiné à l'entrée d'alarme attaquée par les détecteurs, un signal d'alarme, le MP :
- assure, à travers ADCI, l'actionnement des dispositifs d'avertissement d'alarme acoustiques ou d'un autre type, selon les sites d'alarme envisagés par le programme MP,

- assure, à travers ELCI, la déconnexion des circuits EOCI et, par conséquent, le verrouillage du moteur,
- actionne, à travers ALCI, les indicateurs lumineux d'avertissement d'alarme ;

= = = si le ATS n'est pas armé mais que les circuits EOCI sont connectés et que la porte du côté du conducteur est ouverte, une commande arrivant au MP à la suite de l'actionnement de la touche (TA1) de la télécommande, est voulue par le MP en tant que commande d'alarme antivol, et, de ce fait, le MP :
- arme immédiatement le ATS à travers DSCI et,
- seulement après la temporisation prédéterminée, actionne à travers le ATCI les dispositifs d'avertissement d'alarme, acoustiques et d'un autre type et, à travers le ELCI, les EOCI sont déconnectés et, par conséquent, le moteur est verrouillé,
- et ne provoque l'arrêt du cycle d'alarme antivol qu'en réponse à l'ouverture et à la refermeture (SW3) de l'alimentation du circuit SUCI et non pas en réponse à une commande issue de la télécommande (I).

5. Système selon la revendication 4,
caractérisé par le fait que le module ATSO (IIIa) comprend des circuits tels et le MP est programmé de telle façon que l'alarme de sabotage du ATS soit provoquée, non pas par la déconnexion de l'alimentation du ATS mais par la reconnexion de l'alimentation après qu'il a été déconnecté, et ladite alarme ne peut s'arrêter qu'après réouverture puis fermeture de l'interrupteur (SW3) d'alimentation du ATS.

6. Système selon une quelconque des revendications précédentes,
caractérisé par le fait que le module ATSO (IIIa) comprend des circuits électroniques (E3, E1) tels et le MP est programmé de telle façon qu'il puisse pré-établir, à la suite de son installation, la durée du temps des cycles de fonctionnement élémentaires des dispositifs d'avertissement d'alarme et décider si cette opération pendant lesdits cycles doit être continue ou intermittente.

7. Système selon une quelconque des revendications précédentes,
caractérisé par le fait que le module (IIIb) pour l'entrée d'alarme arrivant des détecteurs comprend des circuits électroniques tels et le MP est programmé de telle façon que ledit module puisse sélectionner les signaux d'alarme provenant de jeux de détecteurs distincts et envoyer au module ATS (IIIa) des signaux distincts et que ce module est approprié pour provoquer des alarmes différentes selon le jeu de détecteurs qui émettent le signal d'alarme.

8. Système selon une quelconque des revendications précédentes,
caractérisé par le fait que le ATS comprend, parmi les détecteurs d'alarme, un module à ultrasons (IIIc) et ce dernier est muni d'une ou plusieurs DEL, qui sont connectées au module US lui-même, à la commande d'entrée et au MP du module ATSO), et le MP est programmé de telle façon que l'une des DEL signale, en s'allumant, que le ATS a été armé, que la même DEL ou une autre signale, par son allumage et son extinction, qu'une alarme est en marche, provoquée par un signal d'alarme issu du module US (IIIc), et que, à la suite de chaque alarme, une DEL signale par un allumage intermittent qu'une alarme s'est produite et, sur la base de l'intermittence, indique quel est le jeu de détecteurs qui a donné le signal d'alarme, et dans le cas où ce signal est donné par la même DEL qui s'allume pour signaler que le ATS est armé, le signal intermittent est envoyé seulement après le désarmement du ATS et continue jusqu'à ce que la clé (K2) ait été insérée dans le tableau de bord principal, c'est-à-dire jusqu'à ce que les circuits EOCI soient connectés.

9. Système selon la revendication 8,
caractérisé par le fait que le module à ultrassons (IIIc) est monté sur la partie supérieure du pare-brise, à l'intérieur du véhicule automobile, et en ce que, dans le boîtier qui le contient, est aussi monté le module récepteur (IIa) du ATS, de façon à améliorer au maximum la réception des signaux de la télécommande (I) et à permettre ainsi d'équiper cette dernière d'une source d'énergie plus faible (MB).

10. Système selon la revendication 8,
caractérisé par le fait que lesdites DEL sont connectées avec des circuits tels et d'une manière telle qu'une des DEL puisse signaler, en s'éteignant ou en ne s'éteignant pas, qu'une alarme est en marche, alarme qui a été détectée par le module à ultrassons (IIIc), même pendant le temps où le ATS est coupé après son armement, ceci permettant donc d'effectuer des essais de fonctionnement dans ledit intervalle du module US sans amener les dispositifs d'alarme à entrer en action à travers ADCI et ALCI.

11. Système selon une quelconque des revendications précédentes,
caractérisé par le fait que le module d'entrée d'alarme (IIIb) et le module à ultrasons (IIIc) comprennent des circuits électroniques qui sont appropriés, lorsque le ATS est armé, pour envoyer des signaux d'alarme au module ATSO (IIIa) lorsque le module US (IIIc) est saboté, c'est-à-dire que son alimentation est coupée ou court-circuitée, lorsque la porte du conducteur est ouverte et lorsque la surface émettrice ou réceptrice des ultrasons dudit module est masquée.

12. Système selon une quelconque des revendications précédentes,
caractérisé par le fait que le module ATSO (IIIa) comprend des circuits électroniques (E2) tels qu'ils puissent éventuellement être préparés au moment de l'installation du module et que le MP puisse être programmé de telle manière que le module ATSO lui-même n'exécute pas le programme antivol.

## Patentansprüche

1. Diebstahlschutzsystem ATS für Fahrzeuge, mit einer tragbaren Fernbedienung (I) bestehend aus einem Kodiermodul (Ia) mit Steuertaste (TA1), einem Sendemodul (Ib) für Funk-, Infrarot oder sonstige Wellen und einer Stromquelle (MB), und mit einer am Fahrzeug angebrachten Vorrichtung (II,III) mit einem Empfangsmodul (IIa) vom selben Typ wie der Sendemodul, einem Dekodiermodul (IIb), einem Modul ATSO (IIIa) für den Betrieb des Diebstahlschutzsystems und einem Modul (IIIb) zur Eingabe des Alarms von den Detektoren, die beispielsweise aus Kontaktfühlern, Ultraschallmodulen, Hebeschutzvorrichtungen und anderen Detektoren beliebigen Typs bestehen, die nach Betätigung des Steuerknopfes auf der Fernbedienung das System, wenn es entschärft ist und die Versorgung der für den Motorbetrieb nötigen elektrischen Kreise EOCI getrennt ist, scharfmachen, und das ATS-System auf Betätigung des Steuerknopfes auf der Fernbedienung entschärfen, wenn es scharf ist, und den Alarm auslösen, wenn das System selbst sabotiert wird, dadurch gekennzeichnet, daß der Modul ATSO (IIIa) zum Betrieb des Diebstahlschutzsystems und der Modul (IIIb) zur Alarmeingabe von den Detektoren elektrische und elektronische Schaltungen mit diskreten und nicht diskreten Bauteilen aufweisen, die so angeschlossen sind, daß sie auch eine Raubschutzalarmfunktion ausführen können, wenn der Steuerknopf (TA1) auf der Fernbedienung betätigt wird, wenn das ATS-System nicht scharf ist und die EOCI-Schaltungen angeschlossen sind und gleichzeitig die Fahrertür offen ist, d.h., wenn ein Räuber den Fahrer bei laufendem Motor aus dem Fahrzeug nötigt oder jedenfalls der Schlüssel des Hauptarmaturenbrettes des Fahrzeuges eingesteckt ist und die EOCI-Schaltungen aktiv sind, oder wenn die Tür offen ist und der Fahrer die Steuertaste (TA1) der Fernbedienung, normalerweise der in seiner Tasche befindlichen Reservefernbedienung betätigt, während er aus dem Fahrzeug steigt oder unmittelbar danach, vorausgesetzt, daß die Tür noch offen ist, und daß die Raubschutzalarmfunktion aus einem akustischen Alarm und/oder einer anderen Art von Alarm besteht, wobei der EOCI-Eingang abgetrennt wird, d.i. die Sperre des Motors selbst.

2. System nach Anspruch 1, dadurch gekennzeichnet, daß der Modul ATSO (IIIa) elektrische und elektronische Schaltungen mit diskreten und nicht diskreten Bauteilen aufweist, die so angeschlossen sind, daß der Raubschutzalarm mit einer vorbestimmten Verzögerung von der Betätigung der Fernbedienung durch den Fahrer aus erfolgt, sodaß der Räuber mit dem Fahrzeug vor dem Einsetzen des Alarms für ein Verhindern einer Reaktion gegen den Fahrer ausreichend vom Fahrer wegfahren kann.

3. System nach den Ansprüchen 1 und 2, dadurch gekennzeichnet, daß der ATSO-Modul (IIIa) Speicherschaltungen (R44xC33) aufweist, die es erlauben, daß die Raubschutzalarmsteuerung sogar innerhalb einer vorbestimmten Zeit nach dem Schließen der Fahrertür gegeben werden kann.

4. System nach einem der vorangegangenen Ansprüche, dadurch gekennzeichnet, daß der ATSO-Modul (IIIa) einen Mikroprozessor MP und mindestens die folgenden elektronischen Schaltungen aufweist:
   - eine Schaltung SACI zur Sabotagewarnung,
   - eine Schaltung RECI zur Rücksetzung des MP,
   - eine Schaltung PDCI Entriegeln des MP wenn die EOCI's angeschlossen sind, aber die Fahrertür offen ist,
   - eine Schaltung DSCI zum Scharfmachen und Entschärfen des ATS und zur Versorgung der Alarmdetektoren,

- eine Schaltung ARCI zum Signalisieren des Auftretens der Raubschutzbedingungen an den MP, d.h. EOCI angeschlossen und Fahrertür offen,
- eine Schaltung LCCI zum Prüfen des Ver- oder Entriegelungszustandes der DLDE-Vorrichtung zum Sperren der Türschlösser,
- eine Schaltung ADCI zur Betätigung der akustischen und/oder andersartigen Alarmwarneinrichtungen.
- eine Schaltung DLCI zum Verriegeln des DLDE und somit der Türverriegelungen,
- eine Schaltung DUCI zum Entriegeln des DLDE und damit der Türverriegelungen,
- eine Schaltung ALCI zur Betätigung der Alarmwarnlichter,

und daß diese Schaltungen aus diskreten oder nicht diskreten Bauteilen bestehen, die untereinander verbunden sind und an den Mikroprozessor, an die Schaltung SUCI zur Versorgung der am Fahrzeug angebrachten Module des ATS und an die anderen so mit dem ATS verbundenen Elemente des Fahrzeugs selbst angeschlossen sind, wobei der MP ein ROM aufweist, das von der Herstellung aus mit einem Programm maskenprogrammiert ist, das dem ATS die Ausführung folgender Operationen ermöglicht:

- der MP betätigt nach dem Verbinden (SW3) mit der Versorgung nach der Installation im Fahrzeug sofort das Taktschwingsystem (RT1,R28,R29),
- der Rücksetzanschluß (17IC4) wird aufgebracht und der MP somit entriegelt,
- der MP prüft die Schaltung SACI nach Sabotage durch,
- bei keiner Sabotage prüft der MP kontinuierlich den Zustand des Anschlusses (6IC4) des Steuereingangs des Dekodiermoduls (IIb) infolge einer Steuerung durch die Fernbedienung (TA1),
- sobald ein Steuerimpuls für die Betätigung der Fernbedienung (I) ankommt, führt der Mikroprozessor folgende Operationen durch:
- Prüfung des DSCI ob das ATS scharf ist oder nicht,
= = wenn das ATS nicht scharf ist, ist das von der Fernbedienung (I) kommende Eingangssteuersignal als Steuersignal für den MP zum Scharfmachen des ATS bestimmt, nachdem der MP geprüft hat, daß die Fahrertür nicht offen ist und die EOCI nicht angeschlossen sind, sodaß der MP
  - durch Versorgung der Alarmdetektoren das ATS scharfmacht,

- durch ALCI die speziellen Anzeigelichter, üblicherweise die Richtungsanzeiger betätigt, um dem Fahrer anzuzeigen, daß das ATS scharfgemacht wurde, durch LCCI durchprüft, ob der DLDE in Entriegelungsstellung für die Türschlösser ist und
- wenn ja, über den DLCI den DLDE zum Schließen der Verriegelungen betätigt, nach einigen Sekunden über LCCI prüft, ob die Schlösser geschlossen wurden, und
- wenn nicht, einen der Alarmdetektoren betätigt, sodaß dieser ein Signal sendet, welches den Fahrer informiert, daß die Türschlösser nicht verriegelt wurden,
- wenn nach der ersten Prüfung des DLDE bereits die Verriegelungsstellung festgestellt wird, Nichtausführen der letzten drei Operationen;
= = wenn das ATS bereits scharf ist, ist die von der Fernbedienung kommende Eingangssteuerung als Steuerung für das ATS bestimmt, sodaß der MP:
  - das ATS über den DSCI durch Abschalten der Versorgung der Alarmdetektoren entschärft,
  - über die Schaltung ALCI die Anzeigen, üblicherweise die Blinker betätigt, um den Fahrer von der Entschärfung des ATS zu informieren,
  - über LCCI den Zustand des DLDE überprüft,
  - wenn dieses verriegelt ist über DUCI dessen Entriegelung veranlaßt und
  - wenn dieses bereits in Entriegelungsstellung ist die vorangegangene Operation nicht ausführt;
= = = daß der MP nach dem Scharfmachen des ATS auf den Empfang eines Alarmsignals von den Detektoren durch den Alarmeingangsmodul
  - über ELCI die Abtrennung der EOCI-Schaltungen und somit die Verriegelung des Motors bewirkt,
  - über ALCI die Alarmwarnlichter betätigt;
= = = daß der MP, wenn das ATS nicht scharf ist, aber die Schaltungen EOCI angeschlossen sind und die Fahrertüre offen ist, eine einkommende Steuerung auf eine Betätigung der Fernbedienungs-Steuertaste (TA1) hin als Raubschutzalarmsteuerung auffaßt und daraufhin
  - sofort über DSCI das ATS scharfmacht,

- und nur nach der vorbestimmten Verzögerung über ADCI die akustischen oder anderen Alarmwarnvorrichtungen betätigt und über die ELCI die EOCI abtrennt und den Motor verriegelt,
- und den Raubschutzalarmzyklus nur anhält, wenn die Versorgung der Schaltung SUCI geöffnet und danach sofort geschlossen wird (SW3), und nicht durch eine Steuerung von der Fernbedienung (I) aus.

5. System nach Anspruch 4, dadurch gekennzeichnet, daß der Modul ATSO (IIIa) derartige Schaltungen aufweist und der MP so programmiert ist, daß der Sabotagealarm des ATS nicht durch das Abtrennen von dessen Versorgung, sondern durch das Wiederanschließen der Versorgung nach dem Abtrennen ausgelöst wird und der Alarm nur nach dem Wiederöffnen und Schließen des ATS-Versorgungsschalters (SW3) enden kann.

6. System nach einem der vorangegangenen Ansprüche, dadurch gekennzeichnet, daß der Modul ATSO (IIIa) solche elektronischen Schaltungen (E3,E1) aufweist und der MP so programmiert ist, daß er nach seiner Installation die Zeitdauer der einzelnen Operationszyklen der Alarmeinrichtungen vorbestimmen kann und ob der Betrieb während der Zyklen kontinuierlich oder intermittierend sein soll.

7. System nach einem der vorangegangenen Ansprüche, dadurch gekennzeichnet, daß der Modul (IIIb) zur Alarmeingabe von den Detektoren solche elektronischen Schaltungen aufweist und der MP so programmiert ist, daß der Modul die Alarmsignale von verschiedenen Detektorensets auswählen kann und dem Modul ATSO (IIIa) verschiedene Signale senden kann, um verschiedene Alarmarten entsprechend den das Alarmsignal sendenden Detektoren auszulösen.

8. System nach einem der vorangegangenen Ansprüche, dadurch gekennzeichnet, daß das ATS neben den Alarmdetektoren einen Ultraschallmodul (IIIa) mit einer oder mehreren LED's aufweist, die so mit dem US-Modul selbst, der Eingangssteuerung und dem MP des Moduls ATSO verbunden sind und der MP so programmiert ist, daß eine der Leuchtdioden durch ihr Aufleuchten anzeigt, daß das ATS scharf gemacht wurde, daß dieselbe oder eine andere LED durch ihr Aufleuchten oder Ausgehen anzeigt, daß ein durch ein Alarmsignal vom Modul US (IIIc) bewirkter Alarm läuft, und daß nach jedem Alarm eine Leuchtdiode durch intermittierendes Leuchten anzeigt, daß ein Alarm erfolgt ist und aufgrund des Intermittierens anzeigt, welches Detektorset das Alarmsignal gegeben hat, und daß das intermittierende Signal dann, wenn das Alarmsignal durch die selbe LED erfolgt, die zur Anzeige des Scharfzustandes des ATS aufleuchtet, nur nach dem Entschärfen des ATS und nach dem Einstecken des Schlüssels in das Hauptarmaturenbrett, d.h., wenn die Schaltungen EOCI angeschlossen sind, gesendet wird.

9. System nach Anspruch 8, dadurch gekennzeichnet, daß der Ultraschallmodul (IIIc) im Fahrzeug im oberen Bereich der Windschutzscheibe angebracht ist und daß der Empfangsmodul (IIa) des ATS im selben Gehäuse angebracht ist, um den bestmöglichen Empfang der Fernbedienung (I) zu gewährleisten, sodaß diese mit einer Stromquelle (MB) geringerer Leistung ausgestattet werden kann.

10. System nach Anspruch 8, dadurch gekennzeichnet, daß die LED's mit solchen Schaltungen verbunden oder so angeschlossen sind, daß eine der Leuchtdioden durch Ausgehen oder nicht anzeigen kann, daß ein vom Ultraschallmodul (IIIc) erfaßter Alarm läuft, selbst dann, während das ATS nach dem Scharfmachen abgetrennt wird, sodaß in diesem Intervall Betriebstests für den Ultraschallmodul durchgeführt werden können, ohne daß die Alarmeinrichtungen über ADCI und ALCI in Betrieb gesetzt werden.

11. System nach einem der vorangegangenen Ansprüche, dadurch gekennzeichnet, daß der Alarmeingabemodul (IIIb) und der Ultraschallmodul (IIIc) elektronische Schaltungen aufweisen, die bei scharfgemachtem ATS Alarmsignale an den Modul ATSO (IIIa) senden, wenn der Modul US (IIIc) sabotiert wird, d.h., seine Versorgung abgetrennt oder kurzgeschlossen wird, wenn die Fahrertüre offen ist und wenn die Sende- oder Empfangsfläche des Moduls für die Ultraschallwellen abgedeckt wird.

12. System nach einem der vorangegangenen Ansprüche, dadurch gekennzeichnet, daß der Modul ATSO (IIIa) elektronische Schaltungen (E2) aufweist, die bei der Installation des Moduls eventuell so vorbereitet werden können und der MP so programmiert ist, daß der Modul ATSO selbst nicht das Raubschutzprogramm ausführt.

FIG. 1

I

| Ia | Ib |

MP

II

| IIa | IIb |

III

| IIIa | IIIb |

IIIc

FIG. 3

a    b    c    d    e    P 13

R9  C11  R10  R13  R16  R17  R19  C20  R23  R26

TEU

R8  CV2  C12  T3  R15  T4  K18  C19  R21  R25

C9  A2  C19  C17  T5  T6  T7

C10  C13  R14  R18  R20  D6  R22  C21

T2  C14  C16  R24

AN  L3  R12  C15

R11

EP 0 273 124 B1

FIG. 2

FIG. 4

FIG. 5

EP 0 273 124 B1

FIG.6

FIG.7

FIG.8

EP 0 273 124 B1